(19) Europäisches Patentamt
European Patent Office
Office européen des brevets

(11) **EP 4 109 723 B1**

(12) **EUROPEAN PATENT SPECIFICATION**

(45) Date of publication and mention
of the grant of the patent:
**04.06.2025 Bulletin 2025/23**

(51) International Patent Classification (IPC):
*H02K 21/22* (2006.01)    *H02K 7/00* (2006.01)
*H02K 29/03* (2006.01)    *H02K 1/27* (2022.01)
*F02N 11/04* (2006.01)

(21) Application number: **22165961.8**

(22) Date of filing: **21.11.2013**

(52) Cooperative Patent Classification (CPC):
**H02K 29/03; F02N 11/04; H02K 7/006;
H02P 25/188;** H02K 7/02; H02K 21/222;
H02K 2213/03

(54) **ENGINE UNIT AND VEHICLE**

MOTOREINHEIT UND FAHRZEUG

UNITÉ DE MOTEUR ET VÉHICULE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **30.11.2012 JP 2012262546
14.08.2013 JP 2013168421**

(43) Date of publication of application:
**28.12.2022 Bulletin 2022/52**

(62) Document number(s) of the earlier application(s) in
accordance with Art. 76 EPC:
**13817748.0 / 2 926 441**

(73) Proprietor: **Yamaha Hatsudoki Kabushiki Kaisha
Iwata-shi, Shizuoka 438-8501 (JP)**

(72) Inventors:
• **NISHIKAWA, Takahiro**
**Shizuoka, 4388501 (JP)**
• **HINO, Haruyoshi**
**Shizuoka, 4388501 (JP)**
• **FURUTA, Hideki**
**Shizuoka, 4388501 (JP)**

(74) Representative: **Stöckeler, Ferdinand et al
Schoppe, Zimmermann, Stöckeler
Zinkler, Schenk & Partner mbB
Patentanwälte
Radlkoferstrasse 2
81373 München (DE)**

(56) References cited:
EP-A1- 1 321 667    EP-A1- 1 505 714
EP-A1- 1 553 684    EP-A2- 1 753 123
WO-A1-01/38728

## Description

Technical Field

The present invention relates to an engine unit and a vehicle.

Background Art

An engine unit mounted to a vehicle such as a motorcycle normally includes a starter motor. The starter motor is, at a time of engine start, driven by a battery provided in the vehicle, to rotate a crankshaft so that an engine is started. At a time of engine start, a gas in a cylinder is compressed in a compression stroke, and, along with this, a resistance to rotation of the crankshaft increases in the compression stroke. The starter motor needs to rotate the crankshaft with overcoming of a high-load region of the compression stroke.

Since the starter motor is mounted to a vehicle such as a motorcycle, it is necessary that the starter motor is suitable for being mounted to a vehicle. More specifically, for example, the starter motor should have a size suitable for being mounted to a vehicle. It is desirable that the starter motor has a small size from the viewpoint of vehicle mountability and running performance.

It is therefore demanded that the starter motor satisfy both of requirements that the starter motor should be suitable for being mounted to a vehicle and that the starter motor should be able to output a torque necessary for rotating a crankshaft with overcoming of a high-load region of a compression stroke.

A typical starter motor conventionally presented is downsized in order to satisfy the requirements, and, at a time of engine start, rotates at a high rotation speed (for example, about 12000 rpm). The rotation speed of the starter motor is reduced at a relatively high ratio of speed reduction (for example, 1/30 to 1/20) by a speed reducer, or the like. In this manner, the typical starter motor conventionally presented obtains a torque necessary for starting an engine.

That is, by means of the high-speed rotation and use of the speed reducer, the typical starter motor conventionally presented achieves both vehicle mountability and a torque output necessary for staring an engine. However, due to the high-speed rotation and use of the speed reducer, the typical starter motor conventionally presented faces difficulties in solving problems of noise and durability.

In this respect, a starter motor with a reduced rotation speed and therefore with a reduced ratio of speed reduction has been conventionally proposed. Examples of such a motor include a starter motor that is connected to a crankshaft without interposition of a speed reducer or the like therebetween. This starter motor is not likely to cause the problems of noise and durability. Since this starter motor is connected to the crankshaft without interposition of a speed reducer or the like therebetween, an attempt to obtain a torque output that is necessary for staring the engine inevitably involves a size increase of the motor, which deteriorates the vehicle mountability.

To improve the vehicle mountability, a swing-back function and a decompression function have been proposed for enabling an engine to be started even with a low motor torque.

Patent Literature 1 (PTL1) discloses an engine with the swing-back function. The swing-back function is a function for, at a time of engine start, once causing reverse rotation of a crankshaft and then causing normal rotation of the crankshaft with an approach run given thereto, in order to overcome a high-load region of a compression stroke. The high-load region of the compression stroke is overcome with use of the swing-back function. This consequently enables the engine to be started even by a starter motor adapted for generation of a lower rotation torque.

Patent Literature 2 (PTL2) discloses an engine with the decompression function. The decompression function is a function for slightly opening a valve, which normally should be closed, in a compression stroke of the engine to thereby allow a compressed gas to escape so that a load in the compression stroke is reduced. The decompression function enables the engine to be started even with a lower torque. Thus, even a starter motor adapted for generation of a lower rotation torque is able to start the engine.

EP 1 505 714 A1 discloses a dynamo-electric machine comprising a stator having a plurality of salient poles wound with a coil, and a rotor fixed with a plurality of permanent magnets and disposed to rotate freely on the outer circumference of the stator. Salient poles becoming in-phase are arranged adjacently in the circumferential direction and adjacent salient poles of in-phase are disposed oppositely to the permanent magnets of different polarity at the same electric angle. Salient poles of in-phase have coils wound in the reverse directions.

Citation List

Patent Literature

PTL1: International Publication No. WO01/038728
PTL2: Japanese Patent Application Laid-Open No. 2007-255272

Summary of Invention

Technical Problem

The swing-back function and the decompression function provide excellent measures for achieving both engine startability and vehicle mountability.

An object of the present invention is to provide an engine unit and a vehicle that achieve improvement in both the engine startability and the vehicle mountability without use of the swing-back function and the decompression function, and, when used in combination with the swing-back function and/or the decompression function, achieve further improvement in the engine startability and the vehicle mountability.

Solution to Problem

To solve the problems described above, the present invention provides an engine unit according to claim 1. Further developments of the invention are defined in the dependent claims. Any embodiments, examples and configurations of the description not falling within the scope of the claims do not form part of the invention and are provided for illustrative purposes only. Examples include the following configurations.

(1) An engine unit mounted to a vehicle, the engine unit including:

a four-stroke engine body having, during four strokes, a high-load region in which a load on rotation of a crankshaft is high and a low-load region in which a load on rotation of the crankshaft is low, the high-load region including a compression stroke, the low-load region including no compression stroke;
a starter motor including an inner stator and a flywheel, the inner stator including a stator core and windings of plurality of phases, the stator core having a plurality of slots arranged at intervals with respect to a circumferential direction, the windings being arranged so as to pass through the slots, the flywheel including a permanent magnet part and a back yoke, the permanent magnet part being provided outside the inner stator with respect to a radial direction, the back yoke being provided outside the permanent magnet part with respect to the radial direction, the flywheel being configured to be rotated along with rotation of the crankshaft; and
a control device connected to the windings of the plurality of phases that are provided in the inner stator, the control device being configured to supply a current from a battery included in the vehicle to the windings of the plurality of phases,
the flywheel including magnetic pole faces that are provided on inner circumferential surfaces of the permanent magnet parts with respect to a radial direction of the starter motor, the magnetic pole faces being arranged side by side in a circumferential direction of the starter motor, the number of the magnetic pole faces included in the flywheel being more than 2/3 of the number of the slots, the flywheel being configured to, at least at a time of starting the four-stroke engine body, rotate with overcoming of the high-load region as a result of the control device changing a current supplied to the winding of each phase.

The engine unit of (1) includes the four-stroke engine body having, during four strokes, the high-load region and the low-load region. The high-load region is a rotation angle region in which a load on rotation of the crankshaft is high. The high-load region includes the compression stroke. The low-load region is a rotation angle region in which a load on rotation of the crankshaft is low. The low-load region includes no compression stroke. In the four-stroke engine body having the high-load region and the low-load region during the four strokes, a torque fluctuation is high, and a high torque is required at a time of shifting from the low-load region to the high-load region.

In a configuration of (1), the number of the magnetic pole faces included in the flywheel is more than 2/3 of the number of the slots. That is, the number of the magnetic poles is large. Therefore, the permanent magnet part has a high permeance coefficient, so that the magnetic flux density is increased. Since the area of the magnetic pole face of the permanent magnet part is small, occurrence of leakage magnetic fluxes in the stator core that do not serve as interlinkage magnetic fluxes can be reduced. As a result, an output torque at a time of engine start (an output torque in a time period before combustion of the engine is started) can be ensured.

Since the number of the magnetic pole faces included in the flywheel is more than 2/3 of the number of the slots, that is, the number of the magnetic poles is large; the angular velocity $\omega$ is high. Here, the angular velocity $\omega$ means an angular velocity in terms of the electrical angle based on a repeating cycle of magnetic poles. The high angular velocity $\omega$ causes a low detent torque. This enables the engine being at rest to quickly increase its rotation speed.

Generally, in the high-load region including the compression stroke, a reaction force of a gas compressed in a combustion chamber of the four-stroke engine body by a piston is applied to the crankshaft and serves as a load on the crankshaft rotating in a normal rotation direction (the direction in which the crankshaft rotates when the vehicle travels forward). Thus, the crankshaft has to rotate in the normal rotation direction against this load (reaction force). However, increase and decrease in the current supplied to the winding of each phase of the starter motor causes a fluctuation in the magnitude of the output torque, and the output torque is reduced in a time period from when a peak torque occurs to when a next peak torque occurs. In this time period, therefore, the speed of normal rotation of the crankshaft decreases due to an influence of the load (reaction force).

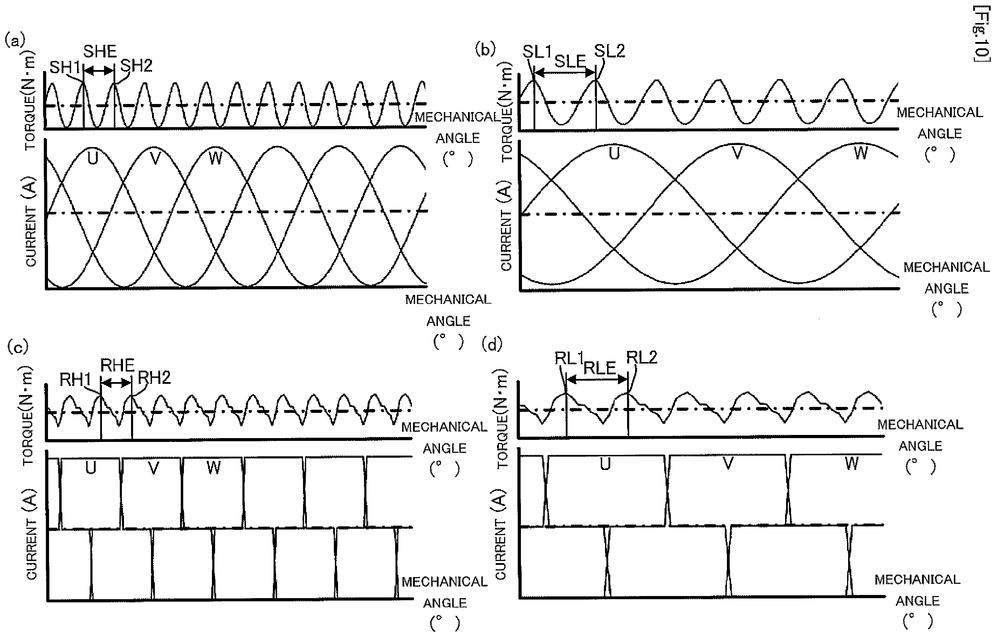

For example, referring to Fig. 10(b), in a case where a time period SLE from when a peak torque SL1 occurs to when a next peak torque SL2 occurs is long, the influence of the load in the time period SLE is large, so that the rotation speed of the crankshaft is largely reduced. Consequently, a force of the crankshaft in the normal rotation direction caused by the torque SL2 is not efficiently added to a force of the crankshaft in the normal rotation direction caused by the torque SL1. As a result, the normal rotation of the crankshaft tends to be intermittent. Thus, it is difficult for the crankshaft to rotate with smooth overcoming of the high-load region.

In this respect, in the configuration of (1), since the number of magnetic poles is large as mentioned above, a cycle of change (increase or decrease) in the current that the control device supplies to the winding of each phase is short. In other words, since the number of magnetic poles is large, the frequency of the current supplied to the winding of each phase is high. Therefore, as shown in Fig. 10(a), a time period SHE from when a peak torque SH1 occurs to when a next peak torque SH2 occurs is short. Thus, the influence of the load in the time period SHE is small. As a result, a reduction in the rotation speed of the crankshaft is suppressed. Accordingly, a force of the crankshaft in the normal rotation direction caused by the torque SH2 is efficiently added to a force of the crankshaft in the normal rotation direction caused by the torque SH1. This improves the torque continuity, so that the influence of the load (reaction force) is suppressed.

At a time of engine start, as compared with at a time of high-speed running of the vehicle, it is less easy to obtain sufficient inertia (rotational moment of inertia) of the flywheel. In order that, under such a situation, the flywheel can rotate with overcoming of the high-load region, it is preferable that the normal rotation is continuously accelerated. In other words, it is preferable that a reduction in the rotation speed of the crankshaft is suppressed. This is why the torque continuity is important. The configuration of (1) has excellent torque continuity at a time of engine start, to enable the flywheel to rotate with overcoming of the high-load region.

In the configuration of (1), the number of the magnetic poles is increased. Accordingly, the area of each pair of magnetic poles with respect to the circumferential direction is reduced. Therefore, the cross-sectional area of a magnetic path formed between the magnetic poles can be reduced. This enables the thickness of the back yoke to be reduced. Reducing the thickness of the back yoke allows the thickness of the permanent magnet part to be increased at the outer side. The effective cross-sectional area of the permanent magnet part can be increased without lowering in the permeance coefficient. Thus, the torque can be increased without causing a size increase in the starter motor. Reducing the thickness of the back yoke also allows the permanent magnet part to be shifted outward so that the stator core is expanded outward. This makes it possible to increase the equivalent cross-sectional area of the permanent magnet part without increasing the outer diameter of the starter motor. It is also possible to increase the number of times the winding is wound. Thus, the torque can be increased without causing a size increase in the starter motor. Moreover, reducing the thickness of the back yoke allows a size reduction in the starter motor, which enhances the vehicle mountability.

As described above, in the configuration of (1): the flywheel includes the magnetic pole faces that are provided on the inner circumferential surfaces of the permanent magnet part, and the number of the magnetic pole faces is more than 2/3 of the number of the slots; and the flywheel is configured to, at least at a time of starting the four-stroke engine body, rotate with overcoming of the high-load region as a result of the control device changing the current supplied to the winding of each phase. Accordingly, the number of magnetic poles is increased. The magnetic flux density is increased, and occurrence of leakage magnetic fluxes in the stator core that do not serve as interlinkage magnetic fluxes can be reduced. As a result, an output torque at a time of engine start is ensured. Additionally, since the number of magnetic poles is increased, the angular velocity $\omega$ is increased. Therefore, a detent torque is low. This enables the engine being at rest to quickly increase its rotation speed. Since the frequency of the current supplied to the winding of each phase is high, the continuity of the output torque at a time of engine start is improved, which suppresses the influence of the load in the high-load region.

In the configuration of (1), a torque required for starting the engine can be outputted at a time of engine start because of the performance of the starter motor itself. Accordingly, the engine unit of (1) is suitable for being mounted to the vehicle, and have an excellent startability. The configuration of (1) is applicable to many kinds of engines (vehicles), and has a high versatility. The engine unit of (1), when used in combination with the swing-back function and/or the decompression function, achieves further improvement in the engine startability and the vehicle mountability.

The following configurations are preferable.

(2) The engine unit according to (1), wherein

the stator core includes teeth each arranged between ones of the plurality of slots,

each of the teeth includes an end portion that is opposed to the magnetic pole face of the permanent magnet part,

the distance between the end portions that are adjacent to each other with respect to the circumferential direction is set such that the width of the end portion of the tooth with respect to the circumferential direction is equal to or less than the width of one of the magnetic pole faces.

In a configuration of (2), the distance between the adjacent end portions is set such that the width of the end portion of the tooth is equal to or less than the width of one magnetic pole face, that is, a relatively wide space is ensured as the distance between the adjacent end portions. As a result, leakage magnetic fluxes are reduced, and therefore a higher output torque can be ensured.

(3) The engine unit according to (1) or (2), wherein

at least after the four-stroke engine body is started, the flywheel rotates along with rotation of the crankshaft under a state where the magnetic pole faces, the number of which is more than 2/3 of the number of the slots, are located radially outward of the inner stator, to thereby cause the starter motor to function as a generator.

In a configuration of (3), the flywheel including the magnetic poles rotates at a location radially outward of the stator along with rotation of the crankshaft, and the number of the magnetic poles is more than 2/3 of the number of slots. Since the number of the magnetic poles included in the flywheel is more than 2/3 of the number of the slots, that is, the number of the magnetic poles of the flywheel is large; the angular velocity $\omega$ is high. This can ensure a high impedance and suppress the power generation current in a high-rotation region in which the starter motor is used as a generator. As a result, any mechanism for allowing a current to escape in the form of heat in order to prevent an excessive increase in a charging current for charging the battery can be omitted or downsized.

(4) The engine unit according to any one of (1) to (3), wherein

the winding of each phase includes a plurality of windings that are connected in parallel,

under a state where the magnetic pole faces, the number of which is more than 2/3 of the number of the slots, are located radially outward of the inner stator including a plurality of windings of each phase that are connected in parallel, the control device changes a current supplied to the plurality of windings of each phase that are connected in parallel, to thereby enable the flywheel to rotate with overcoming of the high-load region.

A configuration of (4) is able to reduce a DC resistance in the impedance of the starter motor. At a time of engine start, reducing the DC resistance can generate a higher torque. As a result, the engine can be started more smoothly.

(5) The engine unit according to any one of (1) to (4), wherein

when the crankshaft is rotated by the starter motor, the control device performs an advance angle control for supplying a current from the battery to the windings of the plurality of phases in such a manner that the phase of a current supplied to each winding is angularly in advance of the phase of an induced voltage caused in the winding by the flywheel rotating outside the inner stator with respect to the radial direction.

In a configuration of (5), the angular velocity ($\omega$) is high, and therefore it is possible to reduce a d-axis current (Id) while ensuring a voltage component ($\omega$LId) that suppresses an induced voltage. This enables an effect exerted by the angular advance to be obtained with a small d-axis current. Thus, high-speed rotation is achieved with a high efficiency.

(6) The engine unit according to (5), wherein

the control device performs the advance angle control at least at a time when the starter motor is rotated at a rotation speed equal to or higher than a rotation speed obtained when combustion of the four-stroke engine body is started.

In a configuration of (6), for power running after the engine start, the effect exerted by the angular advance can be obtained with a small d-axis current. Thus, high-speed rotation is achieved with a high efficiency.

(7) A vehicle including the engine unit according to any one of (1) to (6).

The vehicle of (7) includes the engine that is able to improve both the engine startability and the vehicle mountability without use of the swing-back function and the decompression function, and, when used in combination with the swing-back function and/or the decompression function, able to further improve the engine startability and the vehicle mountability. Accordingly, the vehicle of (10) achieves an excellent engine startability with suppression of a deterioration in running performance which may otherwise be caused by mounting of the engine unit.

Advantageous Effects of Invention

The present invention provides an engine unit and a vehicle that achieve improvement in both engine startability and vehicle mountability without use of a swing-back function and a decompression function, and, when used in combination with the swing-back function and/or the decompression function, achieve further improvement in the engine startability and vehicle mountability.

Brief Description of Drawings

[Fig. 1] (a) is an explanatory diagram schematically showing characteristics of a starter motor according to the present invention and characteristics of a conventional starter motor; and (b) is an explanatory diagram schematically showing the relationship between a crank angle position and a necessary torque at a time of engine start.

[Fig. 2] A cross-sectional view schematically showing an outline configuration of a part of an engine unit including a starter motor according to an embodiment of the present invention.

[Fig. 3] A cross-sectional view showing, on an enlarged scale, the starter motor shown in Fig. 2 and therearound.

[Fig. 4] (a) is an explanatory diagram schematically showing drive characteristics of starter motors according to an example of the present invention and according to a comparative example; and (b) is an explanatory diagram schematically showing power generation characteristics thereof.

[Fig. 5] (a) is an explanatory diagram schematically showing drive characteristics of starter motors according to another example of the present invention and according to a comparative example; and (b) is an explanatory diagram schematically showing power generation characteristics thereof.

[Fig. 6] (a) to (c) are diagrams each schematically showing an example of connection of windings.

[Fig. 7] (a) to (c) are diagrams each schematically showing an example of connection of windings.

[Fig. 8] A cross-sectional view schematically showing, on an enlarged scale, a flywheel and an inner stator of the starter motor shown in Fig. 2.

[Fig. 9] (a) is an explanatory diagram schematically showing the relationship of the interval between end portions of teeth relative to a torque and an inductance; (b) is an explanatory diagram schematically showing the relationship of the interval between end portions of teeth relative to leakage magnetic fluxes and interlinkage magnetic fluxes of a winding; (c) and (d) are explanatory diagrams each schematically showing the leakage magnetic fluxes of the tooth; and (e) and (f) are explanatory diagrams each schematically showing the interlinkage magnetic fluxes of the winding.

[Fig. 10] (a) is an explanatory diagram schematically showing the relationship between a torque and a sine-wave current having a relatively high frequency that is supplied to windings of U-phase, V-phase, and W-phase at a time of engine start in an engine unit according to an embodiment of the present invention; (b) is an explanatory diagram schematically showing the relationship between a torque and a sine-wave current having a relatively low frequency that is supplied to windings of U-phase, V-phase, and W-phase at a time of engine start in an engine unit according to a comparative example; (c) is an explanatory diagram schematically showing the relationship between a torque and a square-wave current having a relatively high frequency that is supplied to windings of U-phase, V-phase, and W-phase at a time of engine start in an engine unit according to another embodiment of the present invention; and (d) is an explanatory diagram schematically showing the relationship between a torque and a square-wave current having a relatively low frequency that is supplied to windings of U-phase, V-phase, and W-phase at a time of engine start in an engine unit according to a comparative example.

Description of Embodiments

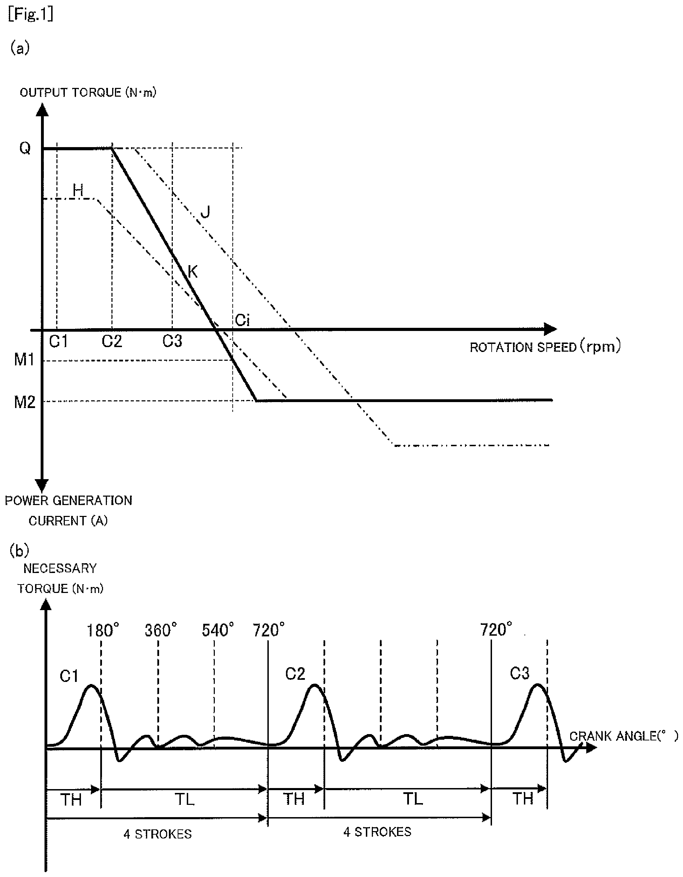

Studies that the present inventors have conducted on the above-described problems will be described with reference to Fig. 1(a) and (b).

Fig. 1(a) is an explanatory diagram schematically showing characteristics of a starter motor according to the present invention and characteristics of a conventional starter motor.

In Fig. 1(a), the horizontal axis represents the rotation speed of a crankshaft of the starter motor. The positive side of the vertical axis represents the magnitude of an output torque outputted from the starter motor, and the negative side of the vertical axis represents the magnitude of a power generation current of the starter motor. K represents exemplary characteristics of the starter motor according to the present invention. H represents exemplary characteristics of the conventional starter motor. J represents exemplary characteristics of a starter motor of a comparative example. C1 to C3 represent the rotation speed of the motor in first to third compression strokes, respectively. As represented by C1 to C3, the rotation speed of the motor increases along with an increase in the number of times the compression stroke has occurred. $C_i$ represents the rotation speed of the motor at a time of idling. Q represents a torque that the starter motor according to the present invention outputs in the first compression stroke C1. M1 represents a power generation current that the starter motor according to the present invention outputs at a time of idling as indicated by $C_i$. M2 represents a power generation current that the starter motor according to the present invention outputs at a time of high-speed rotation.

Fig. 1(b) is an explanatory diagram schematically showing the relationship between a crank angle position and a necessary torque at a time of engine start.

In Fig. 1(b), the horizontal axis represents the crank angle. The vertical axis represents a torque necessary for rotating a crankshaft. TH represents a high-load region. TL represents a low-load region. The high-load region TH is a region of the rotation angle in which a load on rotation of the crankshaft is high. The high-load region TH includes a compression stroke. The low-load region TL is a region of the rotation angle in which a load on rotation of the crankshaft is low. The low-load region TL does not include a compression stroke. Fig. 1(b) illustrates a case where a four-stroke engine body (hereinafter, also referred to simply as an engine) is a single-cylinder engine. A compression stroke corresponds to the high-load region. An expansion stroke, an exhaust stroke, and an intake stroke correspond to the low-load region. An engine unit according to the present invention includes a high-load region TH and a low-load region TL during four strokes. Although rotation of the crankshaft is started in the compression stroke in Fig. 1(b), a position where rotation of the crankshaft starts is not particularly limited. Needless to say, it is possible that the position where rotation of the crankshaft starts varies for each engine start.

The present inventors have focused on a compression stroke at a time of engine start in the studies on the problems described above. The starter motor has to rotate the crankshaft with overcoming of the high-load region TH in the compression stroke. A small-size engine mounted to a motorcycle or the like, such as a single-cylinder engine or a two-cylinder engine, causes a large torque fluctuation, and therefore a load in the compression stroke is high. Thus, the starter motor needs to have a higher output torque. In other words, if a starter motor is applicable to an engine causing a large torque fluctuation, it means that the starter motor can be applied not only to a single-cylinder engine or a two-cylinder engine but also an engine having more cylinders. Achievement of such a starter motor enables applications to more kinds of engines. This increases the versatility.

Therefore, in the following, a single-cylinder engine having neither the swing-back function nor the decompression function (see Fig. 1(b)) will be described as an example. In the single-cylinder engine, a torque fluctuation is large, and a load that should be overcome in each of periodic compression strokes is high. If a starter motor is applicable to such a single-cylinder engine, it means that the starter motor is applicable irrespective of the number of cylinders included in the engine and whether or not the swing-back function or the decompression function is provided. Accordingly, a starter motor having a high versatility is achieved.

As shown in Fig. 1(b), the high-load region TH in the compression stroke periodically occurs at a time of engine start. In Fig. 1(b), the magnitudes of necessary torques in the respective high-load regions TH are equal. Actually, however, inertia is additionally applied as the rotation speed of the starter motor increases, and therefore an output torque necessary in each compression stroke decreases as the rotation speed of the starter motor increases. On the other hand, an output torque of the starter motor decreases as the rotation speed of the starter motor increases.

The present inventors have conducted studies on a load in a compression stroke of a single-cylinder engine, and have found out that it is necessary to increase an output torque in a first compression stroke C1 in order to surely and smoothly implement the engine start. The present inventors have also found out that it is preferable that an output torque in a second compression stroke C2 is high.

In some cases, the starter motor may be used as a generator after the engine start. In a case where the starter motor satisfies the characteristics required for a generator, it is not necessary to separately provide a generator in the engine unit, which enables applications to more kinds of engines (vehicles). This can further improve the versatility. In a case where the starter motor functions as a generator, as described above, an attempt to improve an output torque of the starter motor leads to an increase in the power generation current of the starter motor, which may excessively increase a charging current for charging a battery that is connected to the starter motor.

In a conventional motorcycle or the like, to prevent overcharging a battery, for example, internal circulation of a current is caused so that the excessive current escapes as a copper loss. For this purpose, for example, a rectifier regulator with a heat dissipation fin is provided. In an automobile, for example, an alternator including a generator and a regulator is provided, and the alternator suppresses the amount of power generation. However, from the viewpoint of the vehicle mountability, it is difficult that such an alternator for use in an automobile is mounted to a motorcycle or the like.

Achieving suppression of the power generation current of the starter motor enables downsizing or omission of a heat dissipation mechanism. To be specific, for example, a rectifier regulator can be downsized. This is preferable from the viewpoint of the vehicle mountability and the running performance. Additionally, applications to more kinds of engines (vehicles) are enabled, so that the versatility is improved.

The descriptions given above are summarized as follows. Achieving a starter motor that is able to increase an output torque at least in the first compression stroke C1 with suppression of an increase in the power generation current, which is preferable from the viewpoint of the vehicle mountability and the running performance, results in enabling applications to more kinds of engines (vehicles) and improving the versatility. Moreover, achieving a starter motor that is able to increase an output torque in the second compression stroke C2 is more preferable. Here, there is a trade-off relationship between improvement in an output torque at a time of engine start and suppression of the power generation current after the engine start. It is not easy to satisfy both of these requirements.

Therefore, the present inventors have conducted studies about how to achieve a starter motor that is able to deal with the trade-off relationship and increase the output torques in the first and second compression strokes C1 and C2 with suppression of an increase in the power generation current.

A starter motor having characteristics H shown in Fig. 1(a) is an example of a conventionally known starter motor.

In the conventionally known starter motor, the impedance is set high, for suppression of a power generation current in a high-speed rotation region.

In the conventional starter motor in which the impedance is set high, such as the starter motor having the characteristics H shown in Fig. 1(a), the impedance being set high suppresses the power generation current in a high-speed rotation region in which the rotation speed exceeds the idling rotation speed of the engine. In contrast, in a low-speed rotation region at a time of engine start, a current flowing through a winding is small because the impedance is high. This causes a problem that generation of a sufficient drive torque cannot be obtained. Therefore, in order to start the engine by using this starter motor, for example, the above-described swing-back function or decompression function is necessary.

The present inventors have studied about reducing the impedance of the starter motor in order to obtain a high starting torque. Reducing the impedance can increase an output torque at a time of engine start, as indicated by the characteristics J shown in Fig. 1(a). However, reducing the impedance causes an inconvenience when the starter motor functions as a generator in the high-speed rotation region. That is, in a case where the starter motor is connected to a battery via a normal rectifier circuit, a charging current supplied to the battery is too large. Therefore, it is necessary to block or suppress inflow of a current to the battery by, for example, causing a short circuit at the output of each phase by using an inverter.

Causing a short circuit at the output of each phase in this manner results in occurrence of a copper loss, because a high short circuit current flows through the winding during the control of the power generation current at a time of high-speed rotation. This deteriorates the efficiency as the generator. Therefore, the present inventors have studied about devising the structure of a rotating electric machine itself instead of adopting the method of, for example, causing a short circuit in the winding by using an inverter or the like. To be specific, enabling the impedance to be reduced in the low-speed rotation region and increased in the high-speed rotation region leads to achievement of a starter motor that is able to increase an output torque in the first and second compression strokes C1 and C2 with suppression of an increase in the power generation current.

As a result of further studies, the present inventors have found out that $\omega$L in the impedance makes a relatively large contribution to suppression of the power generation current in the high-speed rotation region.

A current I that flows through each phase at a time of power generation is represented by the following expression (I).

$$I = (Vbat-Ea) / (R^2+\omega^2L^2)^{1/2} \qquad \ldots (I)$$

(Vbat: battery voltage, Ea: induced voltage, R: DC resistance, $\omega$: angular velocity in terms of electrical angle, L: inductance; $(R^2+\omega^2L^2)^{1/2:}$ impedance)

The Vbat occurs at a time of power generation, too. In such a case, the relationship of Vbat<Ea is established.

The angular velocity $\omega$ is represented by the following expression (II).

$$\omega = (P/2)\times(N_{rpm}/60)\times2\pi \qquad \ldots (II)$$

(P: the number of magnetic poles, N: rotation speed)

Increasing the $\omega$L is one possible method for suppressing the power generation current.

To increase the inductance L in the $\omega$L, it is conceivable to narrow the interval between teeth of a stator core. Narrowing the interval between the teeth leads to an increase in the impedance in the high-speed rotation region, but magnetic fluxes leaked to a neighboring tooth via the interval between the teeth increases. As a result, magnetic fluxes interlined with the winding decreases. This reduces the output torque of the starter motor. Particularly, since the starter motor is driven by the battery that is mounted to the vehicle, a voltage is limited. Supplying a large current is a possible method for ensuring an output torque. However, even when a large current is supplied, the magnetic fluxes are saturated within the teeth, so that the leakage magnetic fluxes increase. That is, even when the current is increased, it is not likely to contribute to an increase in the output torque. Therefore, improving the output torque is difficult even when the power generation current can be suppressed. In this case, the engine needs the swing-back function or the decompression function, which means a lack of versatility.

To increase the $\omega$ in the $\omega$L, it is conceivable to increase the number P of magnetic poles included in a flywheel. Increasing the number of magnetic poles leads to an increase in the permeance coefficient of a permanent magnet part, so that the magnetic flux density increases. Since the area of a magnetic pole face of the permanent magnet part decreases, occurrence of leakage magnetic fluxes in the stator core that do not serve as interlinkage magnetic fluxes can be reduced. Accordingly, by increasing the current, the output torque can be increased efficiently. Here, when the $\omega$ is high, the magnetic fluxes change at a high frequency, which may undesirably increase an iron loss. However, on condition that the size of the starter motor is not increased from the viewpoint of the vehicle mountability and the running performance when the $\omega$ is increased, each of magnetic poles included in the flywheel has a reduced size as a result of an increase in the number of the magnetic poles. As a result, magnetic fluxes caused in each magnetic pole are reduced. This can reduce an increase in the iron loss caused by an increase in the frequency. Additionally, increasing the angular velocity ω reduces a detent torque. This enables the engine being at rest to quickly increase its rotation speed. Accordingly, increasing the number P of magnetic poles of the flywheel to thereby increase the ω achieves suppression of the power generation current and improvement in the output torque at a time of engine start (particularly, the output torque in the first and second compression strokes C1 and C2). As described above, since the number of magnetic poles is large, the current supplied to the winding of each phase has a high frequency. This improves torque continuity at a time of engine start, and an influence of the load in the high-load region is reduced. Thus, the flywheel is able to rotate with smooth overcoming of the high-load region.

The present invention is an invention accomplished based on the above-described findings. In the present invention, the number P of magnetic poles of the flywheel is increased so that the angular velocity ω is increased, and additionally a current that a control device supplies to the winding of each phase is changed at least at a time of starting the four-stroke engine body, to thereby enable the flywheel to rotate with overcoming of the high-load region.

In the present invention, it is preferable that the current supplied to the winding of each phase is changed so that the flywheel overcomes at least the first and second compression strokes. In this case, an increase in the angular velocity ω results in an increase in the output torque at least in the first and second compression strokes. However, the present invention is not limited to this example. In the present invention, the current supplied to the winding of each phase is changed, to cause the flywheel to overcome at least the first compression stroke. Thus, in the present invention, it may be acceptable that the current supplied to the winding of each phase is changed so that the flywheel overcomes only the first compression stroke. In this case, an increase in the angular velocity ω results in an increase in the output torque in the first compression stroke.

The four-stroke engine body of the present invention has a low-load region during the four strokes. Accordingly, the flywheel is able to accelerate its rotation to obtain high inertia in the low-load region coming after the flywheel overcomes the high-load region including the first compression stroke. Therefore, even though the current supplied to the winding of each phase is stopped in the second compression stroke, the inertia that has been obtained before the current is stopped enables the flywheel to rotate with overcoming of the high-load region including the second compression stroke.

In the low-load region coming before the first compression stroke, too, the flywheel can accelerate the rotation to obtain high inertia. Therefore, even though the current supplied to the winding of each phase is stopped in the first compression stroke, the inertia that has been obtained before the current is stopped enables the flywheel to rotate with overcoming of the high-load region including the first compression stroke.

Thus, in the present invention, it may be acceptable that the supply of the current to the winding of each phase is already stopped at a time point when the flywheel overcomes the high-load region. To be specific, it suffices that the current is supplied to the winding of each phase so that the flywheel rotates and this rotation makes the flywheel overcome the high-load region, and it may be acceptable that the supply of the current to the winding of each phase is already stopped at a time point when the flywheel overcomes the high-load region.

In the present invention, the angular velocity ω is increased so that the output torque at a time of engine start (for example, in the first compression stroke and the second compression stroke) is increased. Such a technique using an increase in the angular velocity ω has been conventionally not applied to a motor for use in power running.

The characteristics K shown in Fig. 1(a) indicate exemplary characteristics of the starter motor according to the present invention. The starter motor according to the present invention is able to output a high torque Q in the first compression stroke C1. The starter motor according to the present invention is able to output a high torque in, for example, the second compression stroke C2, similarly to the torque Q in the first compression stroke. The starter motor is able to output a relatively high torque in the third compression stroke C3, too. In the starter motor according to the present invention, the power generation current at a time of high-speed rotation is M2. Thus, the starter motor having the characteristics K is able to, at a time of engine start, output a torque at the same level as in the characteristics J, while after the engine start, suppress the power generation current to the same level as in the characteristics H.

The starter motor according to the present invention is able to increase the output torque at a time of engine start (for example, the first and second compression strokes C1 and C2) while suppressing an increase in the power generation current. The starter motor according to the present invention has an excellent versatility, because it is suitable for being mounted to a vehicle and applicable to many kinds of engines (vehicles). More specifically, for example, the swing-back function and/or the decompression function can be omitted. On the other hand, when the starter motor according to the present invention is used in combination with an engine having the swing-back function or the decompression function, an output torque required for the starter motor can be lowered. As a result, the starter motor can be further downsized. This is desirable from the viewpoint of the vehicle mountability and the running performance. Moreover, the engine can be started more smoothly (for example, a time required for starting the engine can be shortened). Thus, the engine unit of the present invention can improve both the engine startability and the vehicle mountability without using the swing-back function or the decompression function, and furthermore, in combination with the swing-back function and/or the decompression function, can further improve the engine startability and the vehicle mountability. In a case where the four-stroke engine body is a multi-cylinder engine, a compression stroke that occurs at the earliest after an engine start is called a first compression stroke, and a compression stroke that secondly occurs in a cylinder where the first compression stroke has occurred is called a second compression stroke. That is, there is a possibility that a compression stroke occurs in another cylinder at a time point between the first compression stroke and the second compression stroke. In a case where a compression stroke in one cylinder and a compression stroke in another cylinder successively occur, these two compression strokes may make a single high-load region. In this manner, it is possible that a situation where one high-load region includes two or more compression strokes occurs. It suffices that the four-stroke engine body of the present invention includes a high-load region and a low-load region during the four strokes.

Hereunder, the present invention will be described based on preferred embodiments with reference to the drawings.

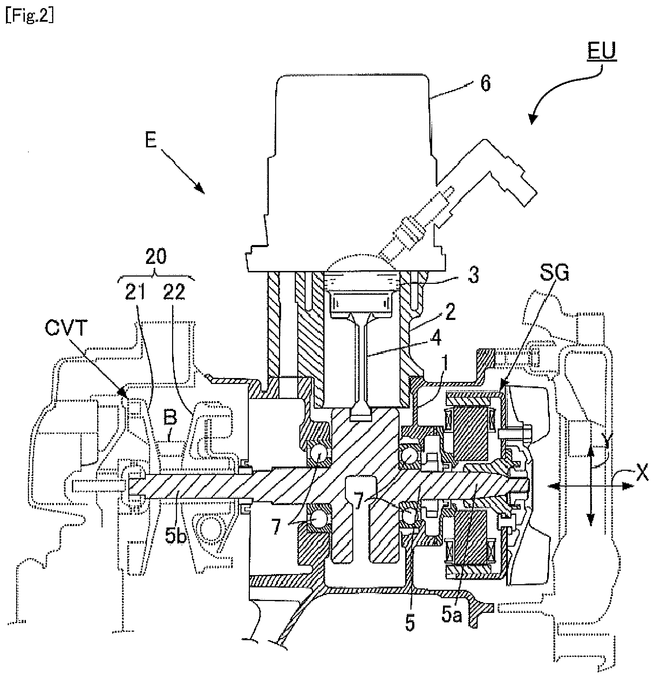

Fig. 2 is a cross-sectional view schematically showing an outline configuration of a part of an engine unit EU that includes a starter motor SG according to an embodiment of the present invention.

The engine unit EU is installed in a motorcycle (not shown) that is an example of a saddle-ride type vehicle. No particular limitation is put on the motorcycle. Examples of the motorcycle include a scooter type motorcycle, a moped type motorcycle, an off-road type motorcycle, and an on-road type motorcycle. The saddle-ride type vehicle is not limited to the motorcycle, and may be an ATV (All-Terrain Vehicle), for example. The vehicle according to the present invention is not limited to the saddle-ride type vehicle, and may be a four-wheeled vehicle including a passenger compartment, for example.

The engine unit EU includes a four-stroke engine body E and a starter motor SG. The four-stroke engine body E is a four-stroke engine having a single cylinder. The four-stroke engine body E has the characteristics K shown in Fig. 1(a). In the four-stroke engine body E, the relationship between the crank angle position and the necessary torque is the one shown in Fig. 1(b). That is, the four-stroke engine body E includes, during four strokes, a high-load region in which a high load is put on rotation of a crankshaft 5 and a low-load region in which a low load is put on rotation of the crankshaft 5. In more detail, the four-stroke engine body E rotates while repeating four strokes of an intake stroke, a compression stroke, an expansion stroke, and an exhaust stroke. As shown in Fig. 1(b), the compression stroke is included in the high-load region and not included in the low-load region. In the four-stroke engine body E of this embodiment, the high-load region is a region that substantially overlaps the compression stroke, and the low-load region is a region that substantially overlaps the intake stroke, the expansion stroke, and the exhaust stroke. However, it is not necessary that the boundary of the high-load region and the boundary of the low-load region are coincident with the boundary of the corresponding strokes.

The engine unit EU includes the starter motor SG. The starter motor SG is a three-phase brushless motor. At a time of engine start, the starter motor SG rotates the crankshaft 5 to start the four-stroke engine body E. At least after the start of the four-stroke engine body E, the starter motor SG is rotated by the crankshaft 5, to function as a generator. In a case where the starter motor SG functions as a generator, it is not indispensable that the starter motor SG functions as a generator all the time after combustion of the engine is started. In an acceptable example, the starter motor SG does not immediately function as a generator after combustion of the engine is started, and the starter motor SG functions as a generator when a predetermined condition is satisfied. Examples of the predetermined condition include a condition that the rotation speed of the engine reaches a predetermined speed and a condition that a predetermined time period elapses after combustion of the engine is started. It may be acceptable that a time period in which the starter motor SG functions as a generator and a time period in which the starter motor SG functions as a motor (such as a vehicle-driving motor) are present after combustion of the engine is started.

The starter motor SG is attached to the crankshaft 5 of the four-stroke engine body E. In this embodiment, the starter motor SG is attached to the crankshaft 5 without interposition of a power transmission mechanism (such as a belt, a chain, a gear, a speed reducer, or a speed increaser). In the present invention, however, it suffices that the starter motor SG is configured such that the crankshaft 5 is rotated by rotation of the starter motor SG. The starter motor SG may be attached to the crankshaft 5 with interposition of a power transmission mechanism. In the present invention, it is preferable that the rotation axis of the starter motor SG is substantially coincident with the rotation axis of the crankshaft 5. It is also preferable that the starter motor SG is attached to the crankshaft 5 without interposition of a power transmission mechanism, as illustrated in this embodiment.

The four-stroke engine body E includes a crank case 1, a cylinder 2, a piston 3, a connecting rod 4, and a crankshaft 5. The cylinder 2 is arranged to protrude from the crank case 1 in a predetermined direction (for example, obliquely upward). The piston 3 is arranged in the cylinder 2 such that the piston 3 is freely movable to and fro. The crankshaft 5 is rotatably arranged in the crank case 1. One end portion (for example, an upper end portion) of the connecting rod 4 is coupled to the piston 3. The other end portion (for example, a lower end portion) of the connecting rod 4 is coupled to the crankshaft 5. A cylinder head 6 is attached to an end portion (for example, an upper end portion) of the cylinder 2. The crankshaft 5 is supported on the crank case 1 via a pair of bearings 7 in a freely rotatable manner. One end portion 5a (for example, a right end portion) of the crankshaft 5 protrudes out of the crank case 1. The starter motor SG is attached to the one end portion 5a of the crankshaft 5.

The other end portion 5b (for example, a left end portion) of the crankshaft 5 protrudes out of the crank case 1. A primary pulley 20 of a continuously variable transmission CVT is attached to the other end portion 5b of the crankshaft 5. The primary pulley 20 includes a fixed sheave 21 and a movable sheave 22. The fixed sheave 21 is fixed to the distal end of the other end portion 5b of the crankshaft 5 in such a manner that the fixed sheave 21 rotates together with the crankshaft 5. The movable sheave 22 is splined to the other end portion 5b of the crankshaft 5. Thus, the movable sheave 22 is movable in an axial direction X. The movable sheave 22 is configured to rotate together with the crankshaft 5 with the interval between the movable sheave 22 and the fixed sheave 21 varying. A belt B is wrapped on the primary pulley 20 and a secondary pulley (not shown). A rotation force of the crankshaft 5 is transmitted to a drive wheel (not shown) of the motorcycle.

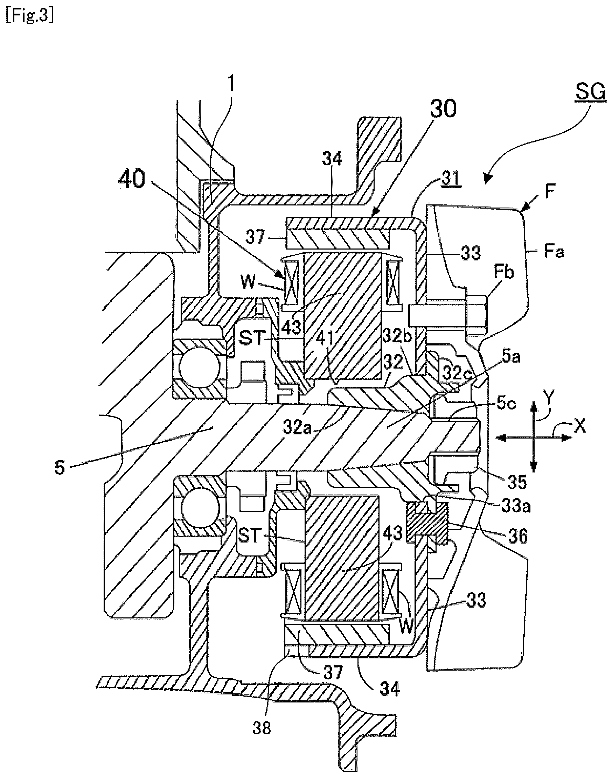

Fig. 3 is a cross-sectional view showing, on an enlarged scale, the starter motor SG shown in Fig. 2 and therearound.

The starter motor SG includes a flywheel 30, an inner stator 40, and a magnetic sensor unit (not shown). The flywheel 30 includes a flywheel main body 31 and a plurality of permanent magnet parts 37 that are provided to the flywheel main body 31. The flywheel main body 31 is made of, for example, a ferromagnetic material. The flywheel main body 31 is in the shape of a cylinder with a bottom. The flywheel main body 31 includes a cylindrical boss portion 32, a disk-shaped bottom wall 33, and a back yoke 34 having a cylindrical shape. The cylindrical boss portion 32 is fixed to the crankshaft 5 under a state where the one end portion 5a of the crankshaft 5 is received in the cylindrical boss portion 32. The bottom wall 33, which is fixed to the cylindrical boss portion 32, has a disk-like shape that extends in a radial direction Y of the crankshaft 5. The back yoke 34 has a cylindrical shape that extends in the axial direction X of the crankshaft 5 from an outer circumferential edge of the bottom wall 33. The back yoke 34 extends toward the crank case 1 side.

The bottom wall 33 and the back yoke 34 are integrally formed through, for example, a stamping process performed on a metal plate. In the present invention, the bottom wall 33 and the back yoke 34 may be formed as separate members. More specifically, in the flywheel main body 31, the back yoke 34 may be integrally formed with another part of the flywheel main body 31, or may be formed as a member separate from another part of the flywheel main body 31. In a case where the back yoke 34 and another part are formed as separate members, it suffices that the back yoke 34 is made of a ferromagnetic material, and another part may be made of a material different from the ferromagnetic material.

The cylindrical boss portion 32 has a tapered reception hole 32a for receiving the one end portion 5a of the crankshaft 5. The tapered reception hole 32a extends in the axial direction X of the crankshaft 5. The tapered reception hole 32a has a taper angle that corresponds to an outer circumferential surface of the one end portion 5a of the crankshaft 5. When the one end portion 5a of the crankshaft 5 enters the reception hole 32a, the outer circumferential surface of the one end portion 5a comes into contact with an inner circumferential surface of the reception hole 32a, and the crankshaft 5 is fixed to the reception hole 32a. As a result, the position of the boss portion 32 is settled with respect to the axial direction X of the crankshaft 5. In this condition, a nut 35 is screwed onto a male thread 5c formed at the distal end of the one end portion 5a of the crankshaft 5. Thereby, the cylindrical boss portion 32 is fixed to the crankshaft 5.

The cylindrical boss portion 32 has a large-diameter portion 32b that is provided in a proximal end portion (at the right side in Fig. 3) of the cylindrical boss portion 32. The cylindrical boss portion 32 has a flange portion 32c that is formed on an outer circumferential surface of the large-diameter portion 32b. The flange portion 32c extends radially outward. The large-diameter portion 32b of the cylindrical boss portion 32 is received in a hole 33a that is formed in a central portion of the bottom wall 33 of the flywheel main body 31. In this condition, the flange portion 32c is in contact with an outer circumferential surface (a right-hand surface in Fig. 3) of the bottom wall 33. The flange portion 32c of the cylindrical boss portion 32 and the bottom wall 33 of the flywheel main body 31 are integrally fixed by rivets 36 at a plurality of locations with respect to a circumferential direction of the flywheel main body 31. The rivets 36 penetrate through the flange portion 32c and the bottom wall 33.

The plurality of permanent magnet parts 37 are provided on an inner circumferential surface of the back yoke 34 of the flywheel main body 31. Each of the permanent magnet parts 37 is provided such that the S pole and the N pole are arranged side by side with respect to a radial direction of the starter motor SG.

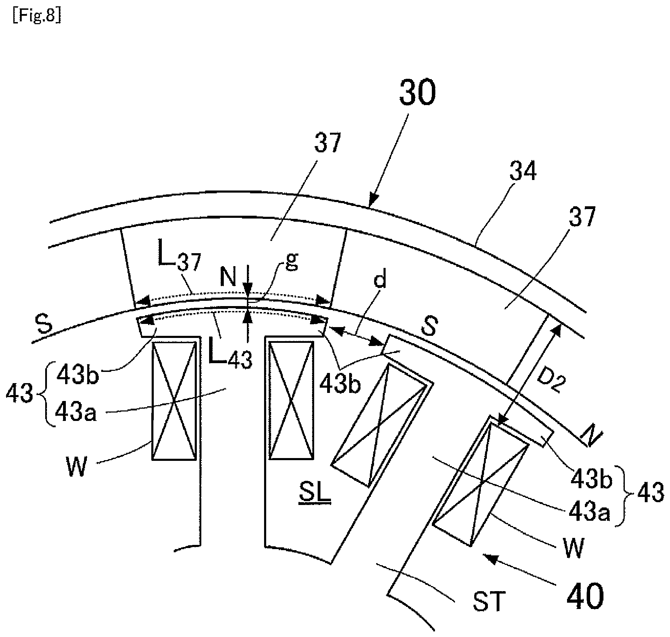

The plurality of permanent magnet parts 37 are arranged in such a manner that the N pole and the S pole alternately appear with respect to a circumferential direction of the starter motor SG. In this embodiment, the number of magnetic poles of the flywheel 30 opposed to the inner stator 40 is sixteen. The number of magnetic poles of the flywheel 30 means the number of magnetic poles opposed to the inner stator 40. The number of magnetic pole faces of the permanent magnet parts 37 that are opposed to teeth 43 of a stator core ST is equivalent to the number of magnetic poles of the flywheel 30. A magnetic pole face included in each magnetic pole of the flywheel 30 corresponds to a magnetic pole face of the permanent magnet part 37 that is opposed to the inner stator 40. The magnetic pole face of the permanent magnet part 37 is covered with a non-magnetic material (not shown) that is arranged between the permanent magnet part 37 and the inner stator 40. No magnetic material is arranged between the permanent magnet part 37 and the inner stator 40. No particular limitation is put on the non-magnetic material, and examples thereof include a stainless steel material. In this embodiment, the permanent magnet part 37 is a ferrite magnet. In the present invention, conventionally known magnets including a Neodymium bonded magnet, a samarium-cobalt magnet, a neodymium magnet, and the like, are adoptable for the permanent magnet part. The shape of the permanent magnet part 37 is not particularly limited. Although the flywheel 30 may be an interior permanent magnet type (IPM type) one configured such that the permanent magnet parts 37 are embedded in a magnetic material, it is preferable that the flywheel 30 is a surface permanent magnet type (SPM type) one configured such that the permanent magnet parts 37 are exposed from a magnetic material, as illustrated in this embodiment (Figs. 3 and 8). The flywheel 30 may be of inset type, too. The flywheel 30 of inset type is configured such that the magnetic pole faces of the permanent magnet parts 37 (the surfaces of the permanent magnet parts 37 opposed to the inner stator 40) are at least partially exposed from the magnetic material, and a magnetic material is arranged between the permanent magnet parts 37 that are adjacent to each other with respect to the circumferential direction.

The back yoke 34 of the flywheel main body 31 has a notch 38. The notch 38 is formed in an end portion of the back yoke 34 at the crank case 1 side. The notch 38 is used for detecting the absolute rotation position of the flywheel 30, as will be described later. The permanent magnet parts 37 are partially exposed to the radially outside through the notch 38. In other words, magnetic fluxes of the permanent magnet parts 37 that are arranged inside the notch 38 with respect to the radial direction of the starter motor SG flow radially outward through the notch 38. As a result, a region where the state of a magnetic field is changed with respect to the circumferential direction of the back yoke 34 occurs in the back yoke 34 of the flywheel main body 31.

As described above, the flywheel 30, which is attached to the crankshaft 5 such that it is rotatable together with the crankshaft 5, is a rotating element for increasing the inertia of the crankshaft 5. A cooling fan F including a plurality of blades Fa is provided to the outer circumferential surface (at the right side in Figs. 2 and 3) of the bottom wall 33 of the flywheel 30. The cooling fan F is fixed to the outer circumferential surface of the bottom wall 33 by means of a fixture (plurality of bolts Fb).

The inner stator 40 includes a stator core ST and windings W. The stator core ST is obtained by, for example, thin silicon steel plates being stacked in the axial direction. The stator core ST has, in its central portion, a hole 41 whose inner diameter is larger than the outer diameter of the cylindrical boss portion 32 of the flywheel 30. The stator core ST includes teeth 43 that integrally extend radially outward (see Fig. 8). In this embodiment, twelve teeth 43 in total are arranged at intervals with respect to the circumferential direction. In other words, the stator core ST has twelve slots SL in total that are arranged at intervals with respect to the circumferential direction.

As shown in Fig. 8, each tooth 43 includes a main portion 43a and a pair of lateral protrusions 43b provided at the distal end of the main portion 43a. The lateral protrusions 43b extend toward opposite sides with respect to the circumferential direction. A portion of the main portion 43a opposed to the flywheel 30 and portions of the lateral protrusions 43b opposed to the flywheel 30 constitute a portion of the tooth 43 opposed to the flywheel 30. In other words, the tooth 43 has an end portion opposed to the flywheel 30. The distance between the lateral protrusions 43b of adjacent teeth 43 corresponds to the distance between the end portions of the adjacent teeth 43. The winding W is wound on the main portion 43a of the tooth 43. The winding W belongs to any of U-phase, V-phase, and W-phase. The windings W are arranged in the order of U-phase, V-phase, and W-phase, for example.

As shown in Fig. 3, the inner stator 40 has the hole 41 formed in a central portion of the inner stator 40 with respect to the radial direction of the starter motor SG. The crankshaft 5 and the cylindrical boss portion 32 of the flywheel 30 are arranged in the hole 41 with a gap between them and a wall surface (of the inner stator 40) defining the hole 41. The inner stator 40 under this condition is attached to the crank case 1 of the four-stroke engine body E. The teeth 43 of the inner stator 40 are arranged such that the end portions (distal surfaces) of the teeth 43 are at an interval g from the magnetic pole faces (inner circumferential surfaces) of the permanent magnet parts 37 of the flywheel 30 (see Fig. 8). In this state, the flywheel 30 and the crankshaft 5 of the four-stroke engine body E rotate integrally.

In the starter motor SG according to this embodiment, as described above, the number P of magnetic poles of the flywheel 30 is sixteen while the number of slots SL is twelve. The ratio of the number P of magnetic poles of the flywheel 30 to the number of slots SL is 4:3. That is, the number of magnetic poles included in the flywheel 30 is more than 2/3 of the number of slots SL. As the ratio of the number of magnetic poles of the flywheel 30 to the number of slots SL that satisfies the aforesaid relationship, for example, 10:12, 8:9, and 4:3 may be mentioned. The ratio of the number of magnetic poles of the flywheel 30 to the number of slots SL is not limited to these examples. Non-limiting example of the upper limit of the ratio of the number P of magnetic poles of the flywheel 30 to the number of slots SL is 4/3. It is preferable that the number of magnetic poles included in the flywheel 30 is equal to or more than 8/9 of the number of slots SL. It is more preferable that the number of magnetic poles included in the flywheel 30 is more than 8/9 of the number of slots SL. It is even more preferable that the number of magnetic poles included in the flywheel 30 is equal to or more than the number of slots SL. It is further preferable that the number of magnetic poles included in the flywheel 30 is more than the number of slots SL. It is still further preferable that the number of magnetic poles included in the flywheel 30 is 4/3 of the number of slots SL. Since the number of magnetic poles is a multiple of 2, alternately arranging the N pole and the S pole is easy. Since the number of slots is a multiple of 3, a control based on a three-phase current is easy. Since the width of the magnetic pole of the permanent magnet part 37 with respect to the circumferential direction of the starter motor SG is larger than half the width of the end portion of the tooth 43, ensuring interlinkage magnetic fluxes is easy. Additionally, deviation is not likely to occur during rotation. Increasing the number P of magnetic poles results in an increase in $\omega$, which can ensure a high impedance at a time of high-speed rotation. In a case where the ratio of the number P of magnetic poles to the number of slots SL is 4:3, it is possible that the number P of magnetic poles is sixteen while the number of slots SL is twelve.

In a case where the number of magnetic poles included in the flywheel 30 is 4/3 of the number of slots SL, it is not necessary that the ratio of the number P of magnetic poles of the flywheel 30 to the number of slots SL is exactly 4:3. For example, in some cases, the slots SL of the inner stator 40 may be partially not formed, in order to allow a control board to be mounted to the inner stator 40. In such a case, the distance between slots SL is changed in part of the slots SL. That is, no slot SL is provided at a position though the slot SL is normally supposed to be provided at the position. In this case, it may be possible that the number of slots SL is determined on the assumption that the slot SL is provided at the position where the slot SL is normally supposed to be formed. The same applies to the number of magnetic poles of the flywheel 30. To be specific, when magnetic poles and slots are arranged so as to form a (4:3)-structure that satisfies the relationship that the ratio of the number of magnetic poles to the number of slots is 4:3, it can be considered that the number of magnetic poles of the flywheel 30 is substantially 4/3 of the number of slots SL. In other words, it can be considered that the starter motor SG has, as its basic configuration, the configuration of a rotating electric machine having the (4:3)-structure. The same applies to a ratio other than 4:3.

The engine unit EU includes a controller (not shown). The starter motor SG is connected to the controller, for example. The controller corresponds to the control device of the present invention. In this embodiment, the controller (control device) is provided in the four-stroke engine body E. Instead, it may be possible that the controller is at a physical distance from the four-stroke engine body E and connected to the four-stroke engine body E by a cable or the like. The controller may have a function as a driver. The controller may be connected to the starter motor SG via a driver. The controller and the driver are not described herein, because conventionally known configurations are adoptable for them.

The controller controls the current supplied to the windings W of the inner stator 40. More specifically, at a time of starting the four-stroke engine body E, the controller changes (e.g., increases or decreases) the current supplied to the winding of each of U-phase, V-phase, and W-phase. How to change the current is not particularly limited. In a possible example, sine-wave currents whose phases are shifted from one another may be supplied to the windings of respective phases, so that the current supplied to the winding of each phase is changed. In another possible example, square-wave currents whose phases are shifted from one another may be supplied to the windings of respective phases, so that the current supplied to the winding of each phase is changed (so-called 120° conduction). This allows the flywheel 30 to rotate with overcoming of the high-load region TH (for example, the first compression stroke C1, the second compression stroke C2) at a time of engine start. When the flywheel 30 rotates, the crankshaft 5 fixed to the flywheel 30 rotates. Rotation of the crankshaft 5 causes the piston 3 to move to and fro via the connecting rod 4. Then, combustion of the four-stroke engine body E is started, and thus the four-stroke engine body E is started.

After the four-stroke engine body E is started, the to-and-fro movement of the piston 3 of the four-stroke engine body E is transmitted to the crankshaft 5 via the connecting rod 4, so that the crankshaft 5 is rotated. When the crankshaft 5 rotates, the flywheel 30 fixed to the crankshaft 5 rotates. This causes the permanent magnet parts 37 of the flywheel 30 to rotate along the outer circumference of the inner stator 40. As a result, due to magnetic fluxes of the permanent magnet parts 37, an induced electromotive force occurs in each winding that forms the winding W wound on the tooth 43 of the inner stator 40. Accordingly, at least after the four-stroke engine body E is started, the starter motor SG functions as a generator.

The starter motor SG includes a magnetic sensor unit (not shown) having a plurality of magnetic sensors. The magnetic sensor unit detects the rotation position of the flywheel 30. The controller controls the starter motor SG based on the rotation position of the flywheel 30 that is detected by the magnetic sensor unit. The starter motor SG starts the combustion of the four-stroke engine body E at a timing that is determined based on the rotation position of the flywheel 30.

At a time of starting the four-stroke engine body E, the controller changes (e.g., increases or decreases) the current supplied to the winding of each of U-phase, V-phase, and W-phase. This allows the flywheel 30 to rotate with overcoming of the high-load region TH (for example, the first compression stroke C1, the second compression stroke C2). The supply of the current to the winding W may be either continuous or intermittent. To be more specific, the current supplied to the winding W is a sine-wave current, a square-wave current, or the like (see Fig. 10(a), (c)), and such a sine-wave current or a square-wave current may be either continuously or intermittently supplied after the time of engine start. The intermittent and continuous supply, as used herein, does not mean continuity or intermittence of a current within a waveform of the sine wave, the square wave, or the like.

It is preferable that the supply of the current to the winding W is performed until the flywheel 30 rotates through at least three strokes. It is also preferable that the supply of the current to the winding W is performed at least until the flywheel 30 overcomes the high-load region TH including the first compression stroke C1. It is also preferable that the supply of the current to the winding W is performed at least until the flywheel 30 overcomes the high-load region TH including the first compression stroke C1 and the high-load region TH including the second compression stroke C2. It is also preferable that the supply of the current to the winding W is performed until the combustion of the engine is started. The inertia of the crankshaft 5 is increased before the combustion of the four-stroke engine body E is started. This enables the crankshaft 5 to rotate with overcoming of the high-load region at a time of engine start.

In this embodiment, the controller supplies a current to the winding W in such a manner that, at a time when the flywheel 30 rotates the crankshaft 5, the phase of the current supplied to the winding W of the inner stator 40 is angularly in advance of the phase of an induced voltage caused in the winding W by the permanent magnet part 37 of the flywheel 30. The starter motor SG, in which the number of magnetic poles included in the flywheel 30 is more than 2/3 of the number of slots, has a high angular velocity ω. Therefore, a combined use of the high angular velocity ω can ensure a voltage component (ωLId) that suppresses the induced voltage while an effect exerted by the angular advance can be obtained due to a small d-axis current. Accordingly, the starter motor SG is capable of high-speed rotation with a high efficiency. A method of the advance angle control is not particularly limited, and a conventionally known method is adoptable. It is preferable that the controller performs the advance angle control at a time when the flywheel 30 rotates the crankshaft 5. In other words, it is preferable that the controller performs the advance angle control at a time of power running. It is preferable that the controller performs the advance angle control at least at a time when the starter motor SG is rotated at a rotation speed equal to or higher than the rotation speed obtained at a time of stating the combustion of the four-stroke engine body E. In this case, it is not indispensable that the controller performs the advance angle control all the time while the rotation speed of the starter motor SG is equal to or higher than the rotation speed obtained at a time of starting the combustion of the engine. It may be acceptable that a period in which the advance angle control is performed and a period in which the advance angle control is not performed are present within a time period during which the rotation speed of the starter motor SG is equal to or higher than the rotation speed obtained at a time of starting the combustion of the engine.

It is also preferable that the controller performs the advance angle control at a time when the starter motor SG is rotated at a rotation speed equal to or higher than the rotation speed obtained when the motorcycle (not shown) is idling. In this case, it is not indispensable that the controller performs the advance angle control all the time while the rotation speed of the starter motor SG is equal to or higher than the rotation speed obtained when the motorcycle is idling. It may be acceptable that a period in which the advance angle control is performed and a period in which the advance angle control is not performed are present within a time period during which the rotation speed of the starter motor SG is equal to or higher than the rotation speed obtained at a time of idling. This enables the starter motor SG to transmit a driving force caused by the starter motor SG to the drive wheel while the four-stroke engine body E is driving the drive wheel.

The starter motor SG described above is able to output a high rotation torque at a time of engine start due to the performance of the motor itself, with suppression of the amount of heat generated when the flywheel 30 rotates along with rotation of the crankshaft 5.

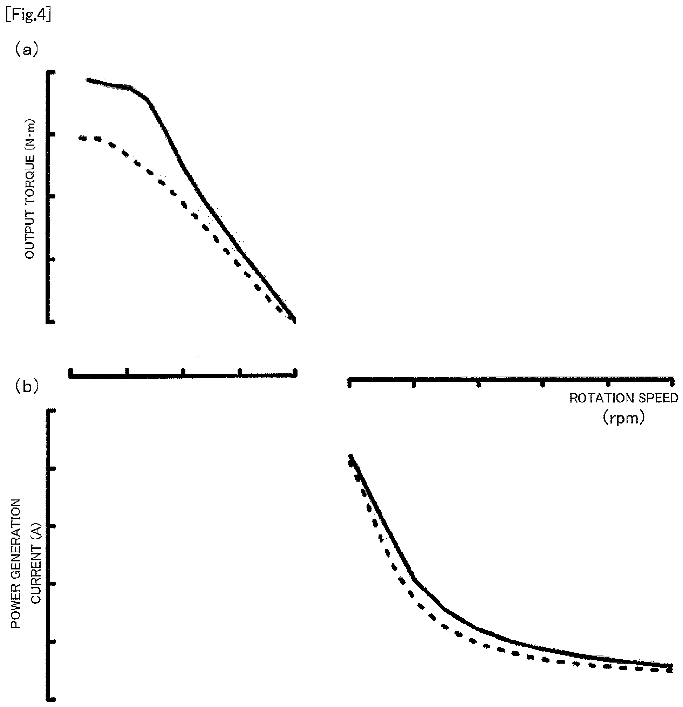

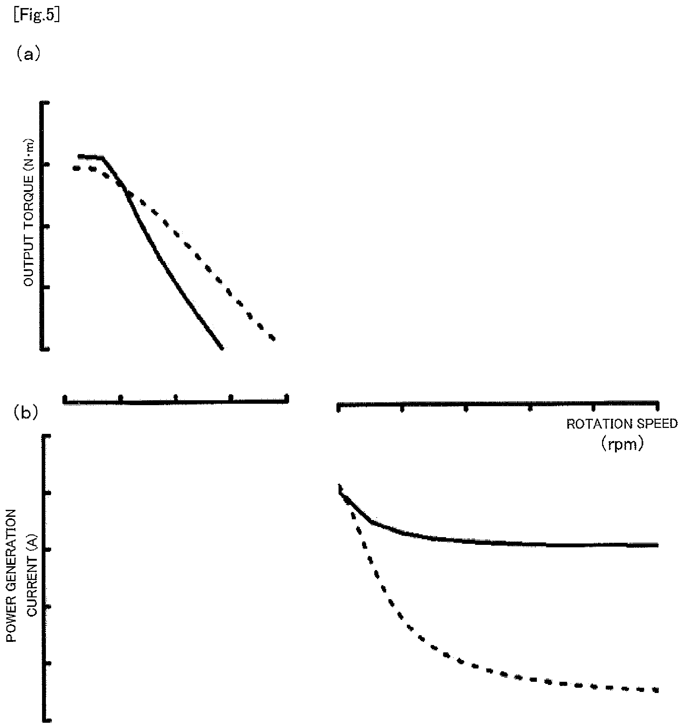

Next, characteristics of the starter motor SG according to an example will be described with reference to Fig. 4(a), (b) and Fig. 5(a), (b).

Fig. 4(a) is an explanatory diagram schematically showing drive characteristics of starter motors according to an example of the present invention and according to a comparative example. Fig. 4(b) is an explanatory diagram schematically showing power generation characteristics thereof. Fig. 5(a) is an explanatory diagram schematically showing drive characteristics of starter motors according to another example of the present invention and according to a comparative example. Fig. 5(b) is an explanatory diagram schematically showing power generation characteristics thereof. In Figs. 4 and 5, the horizontal axis represents the rotation speed of the crankshaft 5. An increment of the rotation speed per scale mark given on the horizontal axis in the diagrams (Fig. 4(a) and Fig. 5(a)) showing the drive characteristics is different from that in the diagrams (Fig. 4(b) and Fig. 5(b)) showing the power generation characteristics. The increment of the rotation speed per scale mark in the diagrams showing the power generation characteristics is greater than the increment of the rotation speed per scale mark in the diagrams showing the drive characteristics. The positive side of the vertical axis represents the output torque, and the negative side of the vertical axis represents the power generation current. The solid line indicates the characteristics of the starter motor according to the example, and the broken line indicates the characteristics of the starter motor according to the comparative example.

Referring to Fig. 4(a), (b), the starter motor according to the present invention is designed with priority given to improvement in the torque over suppression of the power generation current. In the present invention, for example, a relatively wide space may be ensured as the interval d (see Fig. 8) between the end portions of the teeth 43, in order to give priority to improvement in the torque. The starter motor according to the present invention (solid line) is able to output a torque higher than the torque of the starter motor according to the comparative example (broken line) at a time of engine start (Fig. 4(a)), and able to suppress the power generation current to the same level as in the starter motor according to the comparative example (broken line) at a time of high-speed rotation (Fig. 4(b)).

Referring to Fig. 5(a), (b), the starter motor according to the present invention is designed with priority given to suppression of the power generation current over improvement in the torque. More specifically, in the example case shown in Fig. 5(a), (b), the interval d (see Fig. 8) between the end portions of the teeth 43 is set narrower than in the example case shown in Fig. 4(a), (b). The starter motor according to the present invention (solid line) is able to output a torque at the same level as in the starter motor according to the comparative example (broken line) at a time of engine start (particularly in the first and second compression strokes) (Fig. 5(a)), and able to more largely suppress the power generation current as compared with the starter motor according to the comparative example (broken line) at a time of high-speed rotation (Fig. 5(b)).

In a starter motor, as described above, there is a trade-off relationship between improvement in an output torque at a time of engine start and suppression of a power generation current after the engine start. Therefore, giving priority to one of the improvement in the torque and the suppression of the power generation current results in a deterioration in the other characteristics. In the present invention, however, characteristics in which the power generation current is sufficiently suppressed can be obtained even when priority is given to the improvement in the torque, as shown in Fig. 4(a), (b). On the other hand, a sufficient torque can be obtained at a time of engine start even when priority is given to the suppression of the power generation current, as shown in Fig. 5(a), (b). Thus, the starter motor according to the present invention is able to deal with the above-mentioned trade-off relationship by means of the characteristics of the starter motor itself, and able to achieve both the improvement in the output torque at a time of engine start and the suppression of the power generation current after the engine start.

In the starter motor SG, as described above, the winding W is wound on the tooth 43. The winding W is arranged so as to pass through the slot SL. A manner in which the winding W is wound is not particularly limited. Although either of concentrated winding and distributed winding is adoptable, concentrated winding is preferable. A configuration of the winding W may be, for example, as follows.

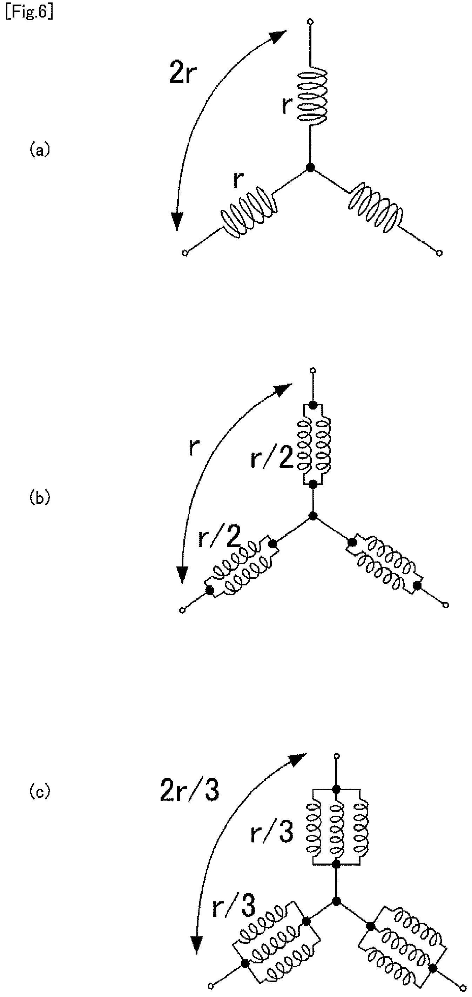

Fig. 6(a) to (c) are diagrams each schematically showing an example of connection of the windings W.

Fig. 6(a) shows star-connection (Y-connection). When a DC resistance of each phase is defined as r, a phase-to-phase resistance R is expressed as R = r+r = 2r. Fig. 6(b) shows parallel connection in which the winding of each phase shown in Fig. 6(a) includes two windings and the two windings are connected in parallel. The phase-to-phase resistance R is expressed as R = r/2+r/2 = r. Fig. 6(c) shows parallel connection in which the winding of each phase shown in Fig. 6(a) includes three windings and the three windings are connected in parallel. The phase-to-phase resistance R is expressed as R = r/3+r/3 = 2r/3.

In the present invention, any of Fig. 6(a) to Fig. 6(c) is adoptable. In the present invention, however, the parallel connection is preferable in which the winding of each phase includes a plurality of windings that are connected in parallel. The reason therefor will be described below.

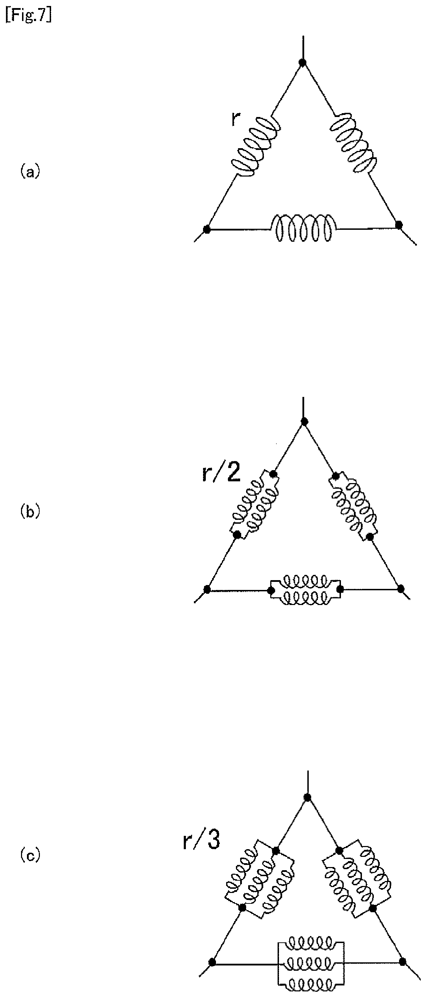

The present inventors have studied about the expression (I), and as a result, found out that a reduction in the DC resistance R in the impedance makes a relatively large contribution to improvement in the torque in the low-speed rotation region. Accordingly, setting the DC resistance R to a small value while setting the $\omega$L to a large value as described above can more effectively ensure a high output torque at a time of engine start. The parallel connection, in which the winding of each phase includes a plurality of windings that are connected in parallel as shown in Fig. 6(b), (c), reduces the DC resistance R. Therefore, a high output torque can be more effectively ensured at a time of engine start. The number of windings that are connected in parallel is not limited to two and three. Four or more windings may be connected in parallel. It may be possible that both parallel connection and series connection exist in the winding of each phase. For example, it may be possible that the winding of each phase includes a plurality of winding sets in each of which a plurality of windings are connected in parallel, and the plurality of winding sets are connected in series with one another. The connection of the windings W is not limited to the examples shown in Fig. 6(a) to (c). Examples shown in Fig. 7(a) to (c) are also adoptable.

Fig. 7(a) to (c) are diagrams each schematically showing an example of connection of windings.

Fig. 7(a) shows delta-connection ($\Delta$-connection). Fig. 7(b) shows parallel connection in which the winding of each phase shown in Fig. 7(a) includes two windings and the two windings are connected in parallel. Fig. 7(c) shows parallel connection in which the winding of each phase shown in Fig. 7(a) includes three windings and the three windings are connected in parallel. In a case of the delta-connection, too, the DC resistance R can be reduced because of the parallel connection in which the winding of each phase includes a plurality of windings that are connected in parallel. The number of windings that are connected in parallel is not limited to two and three. Four or more windings may be connected in parallel.

In the present invention, either of the star-connection and the delta-connection is suitably adoptable, but the star-connection is more preferable for the following reasons: a circulating current is less likely to occur even when a difference in the induced voltage between the phases is caused due to, for example, the positional relationship of the inner stator 40 relative to the flywheel 30 and a difference in the intensity of the magnetic pole of the permanent magnet. Thus, the star-connection is less likely to cause a loss in power generation and able to suppress occurrence of an efficiency drop more effectively. In the present invention, the method for setting the DC resistance R in the impedance to a small value is not limited to the parallel connection mentioned above. For example, adoption of a winding whose cross-section has a large minimum width is conceivable. Since the winding W is arranged so as to pass through the slot SL, the minimum width of the cross-section of the winding W can be increased within a range that allows the winding W to pass through the slot SL.

In a normal electric motor, from the viewpoint of improvement in an output, it is preferable that the number of turns of a winding arranged so as to pass through a slot (the number of times the winding is wound) is large so that the space factor of the winding within the slot is high. In a normal power generator as well, from the viewpoint of power generation efficiency, it is preferable that the number of turns of a winding arranged so as to pass through a slot is large so that the space factor of the winding within the slot is high. Therefore, in the normal electric motor and power generator, the ratio of the minimum width (mm) of the cross-section of the winding to the interval d (mm) between end portions of tooth has been set to a low value.

In contrast, in the engine unit EU according to this embodiment, the flywheel 30 has the magnetic pole faces that are formed on the inner circumferential surfaces of the permanent magnet parts 37 with respect to the radial direction of the starter motor SG and that are arranged side by side in the circumferential direction of the starter motor SG, and the number of the magnetic pole faces is larger than 2/3 of the number of slots SL. The starter motor SG has many magnetic pole faces that are arranged radially outward of the inner stator 40. In the engine unit EU, it is possible to ensure a higher output torque at a time of engine start, at which the rotation speed is low, by increasing the minimum width (mm) of the cross-section of the winding relative to the interval d (mm) between the end portions of the teeth. Increasing the minimum width of the cross-section of the winding relative to the interval d (mm) between the end portions of the teeth results in a reduction in the DC resistance R, which may cause a fear that the power generation current increases when the starter motor SG functions as a generator. However, since the angular velocity $\omega$ is increased, the impedance at a time of high-speed rotation is ensured, and therefore an increase in the power generation current can be suppressed. Accordingly, both an increase in the output torque and suppression of the power generation current can be achieved.

To be specific, the ratio of the minimum width (mm) of the cross-section of the winding W to the interval d (mm) between the end portions of the teeth 43 is preferably 0.2 or more, more preferably 0.25, further preferably 0.3 or more, and particularly preferably 1/3 or more. In case where the cross-sectional shape of the winding W is a true circle, the diameter of the winding W is equivalent to the minimum width of the cross-section of the winding W. In a case where the cross-sectional shape of the winding W is an ellipse, the shorter diameter of the winding W is equivalent to the minimum width of the cross-section of the winding W. In a case where the winding W is formed of a flat rectangular wire, the length of the shorter side of the rectangular cross-section of the winding W is equivalent to the minimum width of the cross-section of the winding W. It may be possible to reduce the DC resistance R in the impedance by adopting a winding made of a material having a low DC resistance.

Fig. 8 is a cross-sectional view schematically showing, on an enlarged scale, the flywheel 30 and the inner stator 40 of the starter motor shown in Fig. 2.

The flywheel 30 includes the back yoke 34 and the plurality of permanent magnet parts 37 that are provided to the inner circumferential surface of the back yoke 34 and arranged side by side in the circumferential direction. The cross-sectional area of each permanent magnet part 37 as sectioned along the circumferential direction of the starter motor SG is substantially constant with respect to the radial direction of the starter motor SG. The cross-sectional area of each permanent magnet part 37 as sectioned along the circumferential direction of the starter motor SG does not increase toward the radially outside of the starter motor SG. It should be noted that the present invention is not limited to this example, and it may be acceptable that the cross-sectional area of each permanent magnet part 37 as sectioned along the circumferential direction of the starter motor SG increases toward the radially outside of the starter motor SG. The inner stator 40 includes the stator core ST and the windings W. The stator core ST includes the teeth 43 that are arranged at intervals with respect to the circumferential direction. The tooth 43 includes the main portion 43a and the pair of lateral protrusions 43b that are provided at the distal end of the main portion 43a and that extend toward opposite sides with respect to the circumferential direction. The slot SL is formed between the teeth 43. The winding W is wound around the main portion 43a of the tooth 43.

The interval g is an interval between the flywheel 30 and the inner stator 40 with respect to the radial direction of the starter motor SG. The interval g is equivalent to an interval between the magnetic pole faces of the permanent magnet parts 37 and the end portions of the teeth 43 with respect to the radial direction of the starter motor SG. The inner circumferential surface of the permanent magnet part 37 has an arc-like shape with the convexity directed radially outward of the starter motor SG when seen along the rotation axis of the starter motor SG. The outer circumferential surface of the stator core ST has an arc-like shape with the convexity directed radially outward of the starter motor SG when seen along the rotation axis of the starter motor SG. The inner circumferential surface (magnetic pole face) of the permanent magnet part 37 is opposed to the outer circumferential surface of the stator core ST with the interval g therebetween. The inner circumferential surface of the permanent magnet part 37 is covered with the non-magnetic material (not shown) as described above, but instead may be exposed to the interval g. No magnetic material is provided in the interval g. The inner circumferential surface of the permanent magnet part 37 is not covered with a magnetic material. The value of the interval g is not particularly limited, and may be about 1 mm, for example. The interval d indicates an interval between the end portions of the teeth 43 that are adjacent to each other with respect to the circumferential direction of the starter motor SG. D2 indicates the distance between the winding W and the back yoke 34 with respect to the radial direction of the starter motor SG. $L_{37}$ indicates the width of the magnetic pole face of the permanent magnet part 37 with respect to the circumferential direction of the starter motor SG. $L_{43}$ indicates the width of the end portion of the tooth 43 of the starter motor SG.

At a time of engine start, the flywheel 30 rotates on the rotation axis of the starter motor SG at a location outside the inner stator 40 with respect to the radial direction of the starter motor SG, under a state where the magnetic pole faces, the number of which is more than 2/3 of the number of slots SL, are opposed to the outer circumferential surface of the stator core ST. The rotation of the flywheel 30 causes the magnetic pole faces, the number of which is more than 2/3 of the number of slots SL, to run over the outer circumferential surface of the stator core ST. Thereby, the flywheel 30 rotates the crankshaft 5.

The outer circumferential surface of the permanent magnet part 37 has an arc-like shape with the convexity directed radially outward of the starter motor SG when seen along the rotation axis of the starter motor SG. The inner circumferential surface of the back yoke 34 has an arc-like shape with the convexity directed radially outward of the starter motor SG when seen along the rotation axis of the starter motor SG. The outer circumferential surface of the permanent magnet part 37 is in contact with the inner circumferential surface of the back yoke 34. More specifically, the outer circumferential surface of the permanent magnet part 37 is, at least in a central portion thereof with respect to the circumferential direction, in contact with the inner circumferential surface of the back yoke 34.

In the starter motor SG of this embodiment, the interval d between the end portions of the teeth 43 that are adjacent to each other with respect to the circumferential direction of the starter motor SG is equal to or less than the distance D2 between the winding W of the back yoke 34 with respect to the radial direction of the starter motor SG. The interval d is set such that the width $L_{43}$ of the end portion of the tooth 43 is equal to or less than the width $L_{37}$ of the magnetic pole face of the permanent magnet part 37. This makes it easy to ensure interlinkage magnetic fluxes of the tooth 43, and thus the output torque can be obtained with an enhanced efficiency.

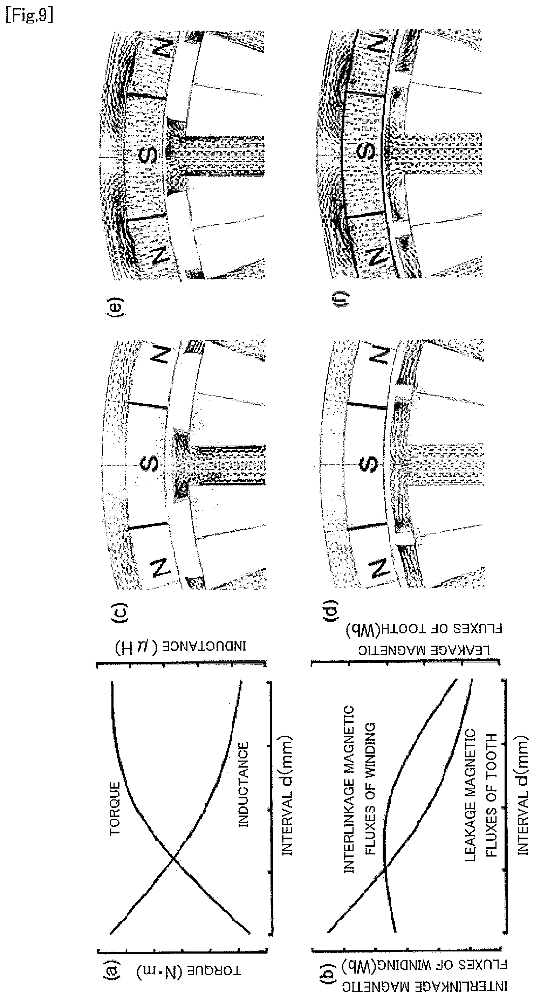

Next, the interval d between the end portions of the teeth 43 will be described with reference to Fig. 9.

Fig. 9(a) is an explanatory diagram schematically showing the relationship of the interval d between the end portions of the teeth 43 relative to a torque and an inductance. Fig. 9(b) is an explanatory diagram schematically showing the relationship of the interval d between the end portions of the teeth 43 relative to leakage magnetic fluxes of the tooth 43 and interlinkage magnetic fluxes of the winding W. Fig. 9(c) and (d) are explanatory diagrams each schematically showing the leakage magnetic fluxes of the tooth 43. Fig. 9(e) and (f) are explanatory diagrams each schematically showing the interlinkage magnetic fluxes of the winding W. In Fig. 9(c) and (d), magnetic fluxes of the flywheel 30 (the permanent magnet part 37) are shown. In Fig. 9(e) and (f), magnetic fluxes of the inner stator 40 (the winding W) are shown.

As shown in Fig. 9(a), the inductance L increases as the interval d between the end portions of the teeth 43 decreases. It has been conventionally considered that a high torque can be ensured by making use of magnetic fluxes that are caused in the winding W as a result of decreasing the interval d between the end portions of the teeth 43. Here, as described above, the present inventors have found out that decreasing the interval d between the end portions of the teeth 43 in order to increase the inductance L leads to an increase in magnetic fluxes leaked to a space between the end portions of the teeth 43 and leads to a decrease in magnetic fluxes interlinked with the winding W, as shown in Fig. 9(b). When the interval d between the end portions of the teeth 43 decreases, a magnetic resistance of the interval d decreases. This undesirably causes part of the magnetic fluxes occurring in the winding W to flow toward the adjacent tooth 43 through the interval d. The part of the magnetic fluxes having flown toward the adjacent tooth 43 does not contribute to generation of a torque. As the interval d between the end portions of the teeth 43 is increased from a small value, the leakage magnetic fluxes of the tooth 43 decrease, as shown in Fig. 9(b).

Fig. 9(c) shows an example of the leakage magnetic fluxes of the tooth 43 in a case where the interval d is relatively wide. Fig. 9(d) shows an example of the leakage magnetic fluxes of the tooth 43 in a case where the interval d is relatively narrow. In Fig. 9(c), substantially no leakage magnetic fluxes is caused. The leakage magnetic fluxes caused in Fig. 9(d) are larger than the leakage magnetic fluxes caused in Fig. 9(c).

As the interval d increases, a decrement of the leakage magnetic fluxes of the tooth 43 relative to an increment of the interval d becomes smaller as shown in Fig. 9(b). That is, once the interval d is increased to a certain extent, then it is difficult to obtain a decrease in the leakage magnetic fluxes even though the interval d is increased any more. This tendency is due to the relationship of the interval d between the end portions of the teeth 43 relative to the distance D2. When the interval d is equal to or less than the distance D2 between the winding W and the back yoke 34, the leakage magnetic fluxes of the tooth 43 decrease as the interval d increases. When the interval d is more than the distance D2, a decrement of the leakage magnetic fluxes of the tooth 43 relative to an increment of the interval d is reduced. Therefore, an increment of the interlinkage magnetic fluxes of the tooth 43 relative to an increment of the interval d is also reduced, as shown in Fig. 9(b).

A further increase in the interval d leads to a decrease in the interlinkage magnetic fluxes of the tooth 43, as shown in Fig. 9(b). This tendency is due to the relationship between the width of the end portion of the tooth 43 with respect to the circumferential direction of the starter motor SG and the width of the magnetic pole face (the width of the permanent magnet part 37) of each magnetic pole of the flywheel 30. When the width of the end portion of the tooth 43 becomes smaller than the width of the magnetic pole face as a result of the increase in the interval d, the area over which the tooth 43 is opposed to the magnetic pole face is reduced, to make it less easy to efficiently obtain the interlinkage magnetic fluxes of the tooth 43.

In consideration of the above, it is preferable that the interval d is set such that the width $L_{43}$ of the end portion of the tooth 43 is equal to or less than the width $L_{37}$ of the magnetic pole face of the permanent magnet part 37. It is preferable that the interval d is equal to or less than the distance D2. In this case, it is more preferable that the number of magnetic poles included in the flywheel 30 is equal to or more than the number of slots SL. It is more preferable that the number of magnetic poles included in the flywheel 30 is more than the number of slots SL. It is further preferable that the number of magnetic poles included in the flywheel 30 is equal to or more than 4/3 of the number of slots SL. It is particularly preferable that the number of magnetic poles included in the flywheel 30 is 4/3 of the number of slots SL.

It is preferable that the interval d is equal to or less than the width $L_{37}$ of the magnetic pole face of the permanent magnet part 37. It is preferable that the interval d is less than the width $L_{37}$ of the magnetic pole face of the permanent magnet part 37. It is preferable that the interval d is equal to or less than ten times the interval g. It is preferable that the interval d is equal to or more than three times the interval g. It is more preferable that the interval d is equal to or more than four times the interval g. It is further preferable that the interval d is equal to or more than five times the interval g. It is particularly preferable that the interval d is equal to or more than seven times the interval g. To be specific, the interval d is preferably equal to or less than 10 mm. The interval d is preferably equal to or more than 3 mm, more preferably equal to or more than 4 mm, further preferably equal to or more than 5 mm, and particularly preferably equal to or more than 7 mm.

An increase in the interval d leads to a decrease in the inductance L as shown in Fig. 9(a). In the starter motor SG, the number of magnetic poles of the flywheel 30 is more than 2/3 of the number of slots SL of the inner stator 40. That is, the ω is high, and thus a value of the ωL is ensured. Even when the value of the inductance L is reduced as a result of an increase in the interval d, it is possible to further improve a torque at a time of start without causing a considerable increase in the power generation current.

Next, the relationship between the frequency of a current supplied to the winding and a torque caused by the current will be described with reference to Fig. 10(a) to (d).

Firstly, a case where a sine-wave current is supplied to the winding will be described with reference to Fig. 10(a) and (b).

Fig. 10(a) is an explanatory diagram schematically showing the relationship between a torque and a sine-wave current having a relatively high frequency that is supplied to windings of U-phase, V-phase, and W-phase at a time of engine start in an engine unit according to an embodiment of the present invention. Fig. 10(b) is an explanatory diagram schematically showing the relationship between a torque and a sine-wave current having a relatively low frequency that is supplied to windings of U-phase, V-phase, and W-phase at a time of engine start in an engine unit according to a comparative example.

The controller of the engine unit EU changes a current supplied to the winding W of each of a plurality of phases (three phases of U-phase, V-phase, and W-phase). More specifically, the controller changes the magnitude of a current supplied to the winding of each phase in such a manner that currents having different phases are supplied to the windings W of different phases, respectively. A phase difference among the currents supplied to the windings of the respective phases is [360 / the number of phases] (°) in the electrical angle.

In the engine unit EU according to the example shown in Fig. 10(a), the number of magnetic pole faces included in the flywheel 30 is more than 2/3 of the number of slots. For example, the number of magnetic pole faces is 4/3 of the number of slots. In the engine unit according to the comparative example shown in Fig. 10(b), the number of magnetic pole faces included in the flywheel is equal to or less than 2/3 of the number of slots. For example, the number of magnetic pole faces is 2/3 of the number of slots. Thus, the number of magnetic poles in the example shown in Fig. 10(a) is more than the number of magnetic poles in the comparative example shown in Fig. 10(b). Therefore, in the example shown in Fig. 10(a), a cycle of change in the magnitude of the current supplied to the winding of each phase is shorter than in the comparative example shown in Fig. 10(b). Accordingly, as shown in Fig. 10(a) and (b), the current supplied to the winding of each phase has a higher frequency in the example shown in Fig. 10(a) than in the comparative example shown in Fig. 10(b).

Generally, a change in the magnitude of a current supplied to the winding of each phase causes a fluctuation in an output torque of the starter motor SG. The fluctuation in the output torque of the starter motor due to the change in the magnitude of the current is small when the rotation speed of the starter motor is high. When the rotation speed of the starter motor SG is low (for example, in the first compression stroke C1, the second compression stroke C2), the fluctuation in the output torque of the starter motor SG due to the change in the magnitude of the current is large, as shown in Fig. 10(a), (b).

In the example shown in Fig. 10(a), since the frequency of the sine-wave current supplied to the winding W of each phase is high, a time period SHE from when a peak torque SH1 occurs to when a next peak torque SH2 occurs is short. In other words, the torque (torque SH1, SH2, ...) at a time of engine start has a high degree of continuity. Therefore, a reduction in the speed of normal rotation of the crankshaft 5 is not likely to occur in the time period SHE. A force of the crankshaft 5 in a normal rotation direction caused by the torque SH2 is efficiently added to a force of the crankshaft 5 in the normal rotation direction caused by the torque SH1. This enables the crankshaft 5 to rotate with smooth overcoming of the high-load region TH (Fig. 1(b)) at a time of engine start.

In the comparative example shown in Fig. 10(b), since the frequency of the sine-wave current supplied to the winding of each phase is low, a time period SLE from when a peak torque SL1 occurs to when a next peak torque SL2 occurs is long. Therefore, a reduction in the speed of the normal rotation of the crankshaft is likely to occur in the time period SLE. A force of the crankshaft in the normal rotation direction caused by the torque SL2 is not efficiently added to a force of the crankshaft in the normal rotation direction caused by the torque SL1. As a result, the normal rotation of the crankshaft tends to be intermittent. This makes it difficult that the crankshaft rotates with smooth overcoming of the high-load region.

The average value of the output torque in the example shown in Fig. 10(a) is substantially equal to the average value of the output torque in the comparative example shown in Fig. 10(b). In the example shown in Fig. 10(a), however, the torque continuity at a time of engine start is higher than in the comparative example shown in Fig. 10(b), as described above. Therefore, the crankshaft 5 rotates with smooth overcoming of the high-load region TH.

Although the sine-wave current is adopted in the example cases illustrated in Fig. 10(a) and (b), the present invention is not limited thereto. Adoption of, for example, a square-wave current also shows the same tendency as adoption of the sine-wave current does.

Next, a case where a square-wave current is supplied to the winding will be described with reference to Fig. 10(c) and (d).

Fig. 10(c) is an explanatory diagram schematically showing the relationship between a torque and a square-wave current having a relatively high frequency that is supplied to windings of U-phase, V-phase, and W-phase at a time of engine start in an engine unit according to another embodiment of the present invention. Fig. 10(d) is an explanatory diagram schematically showing the relationship between a torque and a square-wave current having a relatively low frequency that is supplied to windings of U-phase, V-phase, and W-phase at a time of engine start in an engine unit according to a comparative example.

In the example shown in Fig. 10(c), since the frequency of the square-wave current supplied to the winding W of each phase is high, a time period RHE from when a peak torque RH1 occurs to when a next peak torque RH2 occurs is short. In the comparative example shown in Fig. 10(d), since the frequency of the square-wave current supplied to the winding of each phase is low, a time period RLE from when a peak torque RL1 occurs to when a next peak torque RL2 occurs is long. The average values of the output torques in Fig. 10(c) and (d) are substantially equal. In the example shown in Fig. 10(c), however, the torque continuity at a time of engine start is higher than in the comparative example shown in Fig. 10(d). Therefore, the crankshaft 5 is able to rotate with smooth overcoming of the high-load region.

As thus far described, the engine unit EU according to this embodiment is configured such that the number of magnetic pole faces (sixteen) included in the flywheel 30 is more than 2/3 of the number of slots SL (twelve). Since the number of magnetic poles is large, a high permeance coefficient is obtained, so that the magnetic flux density is increased. Additionally, since the area of the magnetic pole face of the magnet is small, occurrence of leakage magnetic fluxes in the stator core that do not serve as interlinkage magnetic fluxes can be reduced. Thus, an increase in the leakage magnetic fluxes in the stator core ST is suppressed. Moreover, since the number of magnetic poles is large, the angular velocity $\omega$ is high. As a result, the frequency of the current supplied to the winding W of each phase is high, which improves the torque continuity at a time of engine start, to achieve suppression of an influence of a load in the high-load region TH. In the engine unit EU according to this embodiment, therefore, a torque necessary for starting the four-stroke engine body E can be outputted at a time of starting the four-stroke engine body E because of the performance of the starter motor SG itself. The engine unit EU is suitable for being mounted to a vehicle, and have excellent startability. The configuration of the engine unit EU, which is applicable to many kinds of engines (vehicles), has a high versatility. The engine unit EU, when used **in** combination with the swing-back function and/or the decompression function, allows further improvement **in** the engine startability and the vehicle mountability.

Although this embodiment has described a case where the starter motor SG functions also as a generator, it is not always necessary **in** the present invention that the starter motor SG is used as a generator, too. The starter motor SG may be, for example, a device dedicated for used as an engine starter.

This embodiment has described a case where the four-stroke engine body E is a single-cylinder engine. However, no particular limitation is put on the engine of the present invention, as long as the engine includes a high-load region and a low-load region. Thus, a multi-cylinder engine may be adoptable. Examples of the multi-cylinder engine include a straight single-cylinder engine, a parallel double-cylinder engine, a straight double-cylinder engine, a V-type double-cylinder engine, and a horizontal opposed double-cylinder engine. The number of cylinders included **in** the multi-cylinder engine is not particularly limited. The multi-cylinder engine may be, for example, a four-cylinder engine. Here, some of four-cylinder engines have no low-load region. For example, a four-cylinder engine configured such that compression strokes of cylinders occur at equal intervals (a four-cylinder engine configured such that explosion occurs at equal intervals) may be mentioned. Such an engine having no low-load region does not conform to the definition of the engine of the present invention.

Reference Signs List

1     crank case
2     cylinder
3     piston

4     connecting rod
5     crankshaft
5a    one end portion

| 30 | flywheel |
|----|----------|
| 31 | flywheel main body |
| 33 | bottom wall |
| 34 | back yoke |
| 37 | permanent magnet part |
| 40 | inner stator |
| 43 | tooth |
| 43b | lateral protrusion |
| E | four-stroke engine body |
| EU | engine unit |
| SG | starter motor |
| SL | slot |
| ST | stator core |
| W | winding |
| X | axial direction |
| Y | radial direction |
| d | interval between end portions of adjacent teeth |
| g | interval between flywheel and inner stator |

**Claims**

1. An engine unit (EU) mounted to a vehicle, the engine unit comprising:

   a four-stroke engine body (E) having, during four strokes, a high-load region in which a load on rotation of a crankshaft (5) is high and a low-load region in which a load on rotation of the crankshaft is low, the high-load region including a compression stroke, the low-load region including no compression stroke;
   a starter motor (SG) including an inner stator (40) and a flywheel (30), the inner stator (40) including a stator core (ST) and windings (W) of plurality of phases, the stator core having a plurality of slots (SL) arranged at intervals with respect to a circumferential direction, the windings being arranged so as to pass through the slots, the flywheel including a permanent magnet part (37) and a back yoke (34), the permanent magnet part being provided outside the inner stator with respect to a radial direction, the back yoke being provided outside the permanent magnet part with respect to the radial direction, the flywheel being configured to be rotated along with rotation of the crankshaft; and
   a control device connected to the windings of the plurality of phases that are provided in the inner stator, the control device being configured to supply a current from a battery included in the vehicle to the windings of the plurality of phases,
   the flywheel including magnetic pole faces that are provided on inner circumferential surfaces of the permanent magnet parts with respect to a radial direction of the starter motor, the magnetic pole faces being arranged side by side in a circumferential direction of the starter motor, the number of the magnetic pole faces included in the flywheel being more than 2/3 of the number of the slots, the flywheel being configured to, at least at a time of starting the four-stroke engine body, rotate with overcoming of the high-load region as a result of the control device changing a current supplied to the winding of each phase, the flywheel being configured to, at least after the four-stroke engine body is started, rotate along with rotation of the crankshaft under a state where the magnetic pole faces, the number of which being more than 2/3 of the number of the slots, are located radially outward of the inner stator, to thereby cause the starter motor to function as a generator, wherein
   the windings are concentrated windings and are arranged in the order of U-phase, V-phase and W-phase,
   the stator core includes teeth (43) each arranged between ones of the plurality of slots each of the teeth includes an end portion that is opposed to the magnetic pole face of the permanent magnet part,
   the distance between the end portions that are adjacent to each other with respect to the circumferential direction is set such that the width of the end portion of the tooth with respect to the circumferential direction is equal to or less than the width of one of the magnetic pole faces,
   the distance between the end portions of the teeth that are adjacent to each other with respect to the circumferential direction is equal to or less than the distance between the windings and the back yoke with respect to the radial direction of the stator motor,
   the supply of the current to the winding is performed at least until the flywheel overcomes the high-load region including the first compression stroke and the high-load region including the second compression stroke.

2. The engine unit according to claim 1, wherein

the number of magnetic poles of the flywheel is more than the number of slots.

3. The engine unit according to claim 1, wherein
the ratio of the number of magnetic poles of the flywheel to the number of slots is 4:3.

4. The engine unit according to claim 1 or 2, wherein
the ratio of a minimum width of a cross section of the winding to an interval between the end portions of the teeth is 0.2 or more.

5. The engine unit according to any one of claims 1 to 3, wherein
when the crankshaft is rotated by the starter motor, the control device performs an advance angle control for supplying a current from the battery to the windings of the plurality of phases in such a manner that the phase of a current supplied to each winding is angularly in advance of the phase of an induced voltage caused in the winding by the flywheel rotating outside the inner stator with respect to the radial direction.

6. The engine unit according to claim 5, wherein
the control device performs the advance angle control at least at a time when the starter motor is rotated at a rotation speed equal to or higher than a rotation speed obtained when combustion of the four-stroke engine body is started.

7. The engine unit according to claim 4, wherein
in case where the cross-sectional shape of the winding is a true circle, the diameter of the winding is equivalent to the minimum width of the cross-section of the winding.

8. The engine unit according to claim 4, wherein
in a case where the cross-sectional shape of the winding is an ellipse, the shorter diameter of the winding is equivalent to the minimum width of the cross-section of the winding.

9. The engine unit according to claim 4, wherein
in a case where the winding is formed of a flat rectangular wire, the length of the shorter side of the rectangular cross-section of the winding is equivalent to the minimum width of the cross-section of the winding.

10. A vehicle comprising the engine unit according to any one of claims 1 to 9.

**Patentansprüche**

1. Eine Motoreinheit (EU), die an einem Fahrzeug befestigt ist, wobei die Motoreinheit folgende Merkmale aufweist:

einen Viertakt-Motorkörper (E), der während vier Takten einen Hochlastbereich, in dem eine Last auf eine Drehung einer Kurbelwelle (5) hoch ist, und einen Niedriglastbereich, in dem eine Last auf eine Drehung der Kurbelwelle niedrig ist, aufweist, wobei der Hochlastbereich einen Verdichtungstakt umfasst, wobei der Niedriglastbereich keinen Verdichtungstakt umfasst;
einen Startermotor (SG), der einen inneren Stator (40) und ein Schwungrad (30) umfasst, wobei der innere Stator (40) einen Statorkern (ST) und Wicklungen (W) einer Mehrzahl von Phasen umfasst, wobei der Statorkern eine Mehrzahl von Schlitzen (SL) aufweist, die in Abständen in Bezug auf eine Umfangsrichtung angeordnet sind, wobei die Wicklungen so angeordnet sind, dass dieselben durch die Schlitze verlaufen, wobei das Schwungrad einen Permanentmagnetteil (37) und ein hinteres Joch (34) umfasst, wobei der Permanentmagnetteil in Bezug auf eine radiale Richtung außerhalb des inneren Stators vorgesehen ist, wobei das hintere Joch in Bezug auf die radiale Richtung außerhalb des Permanentmagnetteils vorgesehen ist, wobei das Schwungrad dazu konfiguriert ist, zusammen mit einer Drehung der Kurbelwelle gedreht zu werden; und
eine Steuervorrichtung, die mit den Wicklungen der Mehrzahl von Phasen verbunden ist, die in dem inneren Stator vorgesehen sind, wobei die Steuervorrichtung dazu konfiguriert ist, den Wicklungen der Mehrzahl von Phasen einen Strom von einer Batterie zuzuführen, die in dem Fahrzeug enthalten ist,
wobei das Schwungrad Magnetpolflächen umfasst, die an inneren Umfangsflächen der Permanentmagnetteile in Bezug auf eine radiale Richtung des Startermotors vorgesehen sind, wobei die Magnetpolflächen in einer Umfangsrichtung des Startermotors nebeneinander angeordnet sind, wobei die Anzahl der Magnetpolflächen, die in dem Schwungrad enthalten sind, mehr als 2/3 der Anzahl der Schlitze beträgt, wobei das Schwungrad dazu konfiguriert ist, sich zumindest zu einem Zeitpunkt des Startens des Viertakt-Motorkörpers unter Überwindung des Hochlastbereichs als Folge dessen, dass die Steuervorrichtung einen Strom ändert, der an die Wicklung jeder Phase geliefert wird, zu drehen, wobei das Schwungrad dazu konfiguriert ist, sich zumindest nachdem der Viertakt-Motorkörper gestartet wurde, zusammen mit einer Drehung der Kurbelwelle in einem Zustand zu drehen, in dem die Magnetpolflächen, deren Anzahl mehr als 2/3 der Anzahl der Schlitze beträgt, sich radial außerhalb des inneren Stators befinden, um dadurch zu bewirken, dass der Startermotor als ein Generator wirkt, wobei

die Wicklungen konzentrierte Wicklungen sind und in der Reihenfolge von U-Phase, V-Phase und W-Phase angeordnet sind,

der Statorkern Zähne (43) umfasst, die jeweils zwischen einzelner der Mehrzahl von Schlitzen angeordnet sind,

jeder der Zähne einen Endabschnitt umfasst, der der Magnetpolfläche des Permanentmagnetteils gegenüberliegt,

der Abstand zwischen den Endabschnitten, die in Bezug auf die Umfangsrichtung benachbart zueinander sind, so eingestellt ist, dass die Breite des Endabschnitts des Zahns in Bezug auf die Umfangsrichtung gleich oder kleiner ist als die Breite einer der Magnetpolflächen,

der Abstand zwischen den Endabschnitten der Zähne, die in Bezug auf die Umfangsrichtung benachbart zueinander sind, gleich oder kleiner ist als der Abstand zwischen den Wicklungen und dem hinteren Joch in Bezug auf die radiale Richtung des Statormotors,

die Zufuhr des Stroms zu der Wicklung zumindest durchgeführt wird, bis das Schwungrad den Hochlastbereich, der den ersten Verdichtungstakt umfasst, und den Hochlastbereich, der den zweiten Verdichtungstakt umfasst, überwindet.

2. Die Motoreinheit gemäß Anspruch 1, bei der
die Anzahl der Magnetpole des Schwungrads größer ist als die Anzahl der Schlitze.

3. Die Motoreinheit gemäß Anspruch 1, bei der
das Verhältnis der Anzahl der Magnetpole des Schwungrads zu der Anzahl der Schlitze 4:3 beträgt.

4. Die Motoreinheit gemäß Anspruch 1 oder 2, bei der
das Verhältnis einer minimalen Breite eines Querschnitts der Wicklung zu einem Abstand zwischen den Endabschnitten der Zähne 0,2 oder mehr beträgt.

5. Die Motoreinheit gemäß einem der Ansprüche 1 bis 3, bei der
wenn die Kurbelwelle durch den Startermotor gedreht wird, die Steuervorrichtung eine Vorschubwinkelsteuerung zum Zuführen eines Stroms von der Batterie an die Wicklungen der Mehrzahl von Phasen in einer solchen Weise durchführt, dass die Phase eines Stroms, der jeder Wicklung zugeführt wird, winkelmäßig vor der Phase einer induzierten Spannung liegt, die in der Wicklung durch das Schwungrad verursacht wird, das sich in Bezug auf die radiale Richtung außerhalb des inneren Stators dreht.

6. Die Motoreinheit gemäß Anspruch 5, bei der
die Steuervorrichtung die Vorschubwinkelsteuerung zumindest zu einem Zeitpunkt durchführt, wenn der Startermotor mit einer Drehzahl gedreht wird, die gleich oder höher ist als eine Drehzahl, die erhalten wird, wenn eine Verbrennung des Viertakt-Motorkörpers gestartet wird.

7. Die Motoreinheit gemäß Anspruch 4, bei der
in einem Fall, in dem die Querschnittsform der Wicklung ein echter Kreis ist, der Durchmesser der Wicklung äquivalent zu der minimalen Breite des Querschnitts der Wicklung ist.

8. Die Motoreinheit gemäß Anspruch 4, bei der
in einem Fall, in dem die Querschnittsform der Wicklung eine Ellipse ist, der kürzere Durchmesser der Wicklung äquivalent zu der minimalen Breite des Querschnitts der Wicklung ist.

9. Die Motoreinheit gemäß Anspruch 4, bei der
in einem Fall, in dem die Wicklung aus einem flachen rechteckigen Draht gebildet ist, die Länge der kürzeren Seite des rechteckigen Querschnitts der Wicklung äquivalent zu der minimalen Breite des Querschnitts der Wicklung ist.

10. Ein Fahrzeug, das die Motoreinheit gemäß einem der Ansprüche 1 bis 9 aufweist.

# EP 4 109 723 B1

**Revendications**

1. Unité de moteur (EU) montée sur un véhicule, l'unité de moteur comprenant :

   un corps de moteur à quatre temps (E) présentant, pendant quatre temps, une région de charge élevée dans laquelle une charge lors de la rotation d'un vilebrequin (5) est élevée et une région de charge faible dans laquelle une charge lors de la rotation du vilebrequin est faible, la région de charge élevée incluant un temps de compression, la région de charge faible n'incluant aucun temps de compression ;
   un démarreur (SG) incluant un stator intérieur (40) et un volant d'inertie (30), le stator intérieur (40) incluant un noyau de stator (ST) et des enroulements (W) d'une pluralité de phases, le noyau de stator présentant une pluralité de fentes (SL) agencées à intervalles par rapport à une direction circonférentielle, les enroulements étant agencés de manière à passer à travers les fentes, le volant d'inertie incluant une partie aimant permanent (37) et une culasse arrière (34), la partie aimant permanent étant disposée à l'extérieur du stator intérieur par rapport à une direction radiale, la culasse arrière étant disposée à l'extérieur de la partie aimant permanent par rapport à la direction radiale, le volant d'inertie étant configuré pour tourner avec la rotation du vilebrequin ; et
   un dispositif de commande relié aux enroulements de la pluralité de phases qui sont disposés dans le stator intérieur, le dispositif de commande étant configuré pour apporter un courant depuis une batterie incluse dans le véhicule aux enroulements de la pluralité de phases,
   le volant d'inertie incluant des faces de pôle magnétique qui sont disposées sur les surfaces circonférentielles intérieures des parties aimant permanent par rapport à une direction radiale du démarreur, les faces de pôle magnétique étant agencées côte à côte dans une direction circonférentielle du démarreur, le nombre des faces de pôle magnétique incluses dans le volant d'inertie faisant plus de 2/3 du nombre des fentes, le volant d'inertie étant configuré pour, au moins à un moment de démarrage du corps de moteur à quatre temps, tourner avec le dépassement de la région de charge élevée à la suite d'un changement, par le dispositif de commande, d'un courant apporté à l'enroulement de chaque phase, le volant d'inertie étant configuré pour, au moins après le démarrage du corps de moteur à quatre temps, tourner avec la rotation du vilebrequin dans un état où les faces de pôle magnétique, dont le nombre fait plus de 2/3 du nombre des fentes, sont situées radialement vers l'extérieur du stator intérieur, pour ainsi amener le démarreur à servir de générateur, dans lequel
   les enroulements sont des enroulements concentrés et sont agencés dans l'ordre des phase U, phase V et phase W,
   le noyau de stator inclut des dents (43) agencées chacune entre des fentes de la pluralité de fentes
   chacune des dents inclut une portion d'extrémité qui est opposée à la face de pôle magnétique de la partie aiment permanent,
   la distance entre les portions d'extrémité qui sont adjacentes entre elles par rapport à la direction circonférentielle est réglée de telle sorte que la largeur de la portion d'extrémité de la dent par rapport à la direction circonférentielle est inférieure ou égale à la largeur de l'une des faces de pôle magnétique,
   la distance entre les portions d'extrémité des dents qui sont adjacentes entre elles par rapport à la direction circonférentielle est inférieure ou égale à la distance entre les enroulements et la culasse arrière par rapport à la direction radiale du moteur de stator,
   l'apport du courant à l'enroulement est effectué au moins jusqu'à ce que le volant d'inertie dépasse la région de charge élevée incluant le premier temps de compression et la région de charge élevée incluant le deuxième temps de compression.

2. Unité de moteur selon la revendication 1, dans laquelle
   le nombre de pôles magnétiques du volant d'inertie est supérieur au nombre de fentes.

3. Unité de moteur selon la revendication 1, dans laquelle
   le rapport du nombre de pôles magnétiques du volant d'inertie sur le nombre de fentes est 4:3.

4. Unité de moteur selon la revendication 1 ou 2, dans laquelle
   le rapport d'une largeur minimale d'une section transversale de l'enroulement sur un intervalle entre les portions d'extrémité des dents est de 0,2 ou plus.

5. Unité de moteur selon l'une quelconque des revendications 1 à 3, dans laquelle
   lorsque le vilebrequin est mis en rotation par le démarreur, le dispositif de commande effectue une commande d'angle de progression pour apporter un courant depuis la batterie aux enroulements de la pluralité de phases d'une manière telle que la phase d'un courant apporté à chaque enroulement est angulairement en avance sur la phase d'une tension induite provoquée dans l'enroulement par la rotation du volant d'inertie à l'extérieur du stator intérieur par rapport à la direction radiale.

**6.** Unité de moteur selon la revendication 5, dans laquelle
le dispositif de commande effectue la commande d'angle de progression au moins à un moment où le démarreur tourne à une vitesse de rotation supérieure ou égale à une vitesse de rotation obtenue lorsque la combustion du corps de moteur à quatre temps démarre.

**7.** Unité de moteur selon la revendication 4, dans laquelle
dans un cas où la forme en section transversale de l'enroulement est un cercle parfait, le diamètre de l'enroulement équivaut à la largeur minimale de la section transversale de l'enroulement.

**8.** Unité de moteur selon la revendication 4, dans laquelle
dans un cas où la forme en section transversale de l'enroulement est une ellipse, le diamètre plus court de l'enroulement équivaut à la largeur minimale de la section transversale de l'enroulement.

**9.** Unité de moteur selon la revendication 4, dans laquelle
dans un cas où l'enroulement est formé d'un fil rectangulaire plat, la longueur du côté plus court de la section transversale rectangulaire de l'enroulement équivaut à la largeur minimale de la section transversale de l'enroulement.

**10.** Véhicule comprenant l'unité de moteur selon l'une quelconque des revendications 1 à 9.

[Fig.1]

(a)

OUTPUT TORQUE (N·m)

Q

H

J

K

Ci

C1    C2    C3

ROTATION SPEED (rpm)

M1

M2

POWER GENERATION
CURRENT (A)

(b)

NECESSARY
TORQUE (N·m)

180°    360°    540°    720°                    720°

C1                                C2              C3

CRANK ANGLE(°)

TH        TL        TH        TL        TH

4 STROKES        4 STROKES

[Fig.2]

[Fig.3]

[Fig.4]

(a)

OUTPUT TORQUE (N·m)

ROTATION SPEED
(rpm)

(b)

POWER GENERATION
CURRENT (A)

[Fig.5]

(a)

(b)

[Fig.6]

(a)

(b)

(c)

[Fig.7]

(a)

(b)

(c)

[Fig.8]

[Fig.9]

[Fig.10]

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1505714 A1
- WO 01038728 A
- JP 2007255272 A